# EUROPEAN PATENT APPLICATION

(11) **EP 4 834 499 A1**
(43) Date of publication of application: **04.11.2026**
(21) Application number: 26174494.0
(22) Date of filing: 24.04.2026
(51) Int. Cl.: B21C 37/15, B21C 37/08, B21C 37/18, B21C 47/24, F16L 9/04, F16L 9/16, B21C 47/04, B21C 47/18

(54) **REINFORCED AND DAMPED TUBULAR STRUCTURES**

(30) Priority: 30.04.2025 US 202519194622
(71) Applicant: Techreo LLC, Loveland OH 45140 (US)
(72) Inventor: McNeil, Kevin, Cincinnati OH 4, 5140 (US); Byrne, Thomas, West Chester OH, 45069 (US)
(74) Representative: Herrero & Asociados, S.L.

(57) **Abstract**

A tubular structure is disclosed. The tubular structure comprises an inner region, a middle region, and an outer region. The inner region has a single layer tube. The middle region comprises a sheet metal convolutely wound about the longitudinal axis of the inner region single layer tube. The outer region has a single layer tube. Adhesive bonds the adjacent layers of the convolutely wound middle region. Adhesive also bonds the convolutely wound middle region to the inner region single layer tube and to the outer region single layer tube. The tubular structure may be used for robot arm tube extensions and may provide desired capabilities for such applications, including being lightweight, deflection resistant, comprising good internal vibration damping, having strong mounting surfaces, and being resistant to cracks and other damage.

## Description

### Cross Reference to Related Applications

This is a continuation-in-part of US Patent Application Serial No. 18/901,201, filed September 30, 2024, which is a continuation of US Patent Application Serial No. 17/882,100, filed August 5, 2022, which is a continuation-in-part of US Patent Application Serial No. 16/747,464, filed January 20, 2020, which claimed the benefit of US Provisional Patent Application Serial No. 62/794,638, filed January 20, 2019, US Provisional Patent Application Serial No. 62/797,426, filed January 28, 2019, US Provisional Patent Application Serial No. 62/815,451, filed March 8, 2019 and US Provisional Patent Application Serial No. 62/873,124, filed July 11, 2019. Each of these prior applications is hereby incorporated by reference in its entirety.

### Background of the Invention

Tubular structures suitable for use in robotic end-of-arm tooling applications may be formed by convolutely winding sheet metal about a mandrel that defines the longitudinal axis, interior cross-sectional shape, and interior size of the tubular structure. The convolutely wound tubular structure may be adhesively bonded to other tubular structures. Such tubular structures can be light weight, resistant to axial deflection, comprise excellent vibration damping, resist cracking, and provide strong mounting surfaces.

Industrial robots are often used to move objects from one position to another, form product layers on a pallet, apply materials to an object, weld objects together, and many other functions. To reach the desired work point, extension tubes are often connected to the distal end of the robot arm, commonly referred to as the robot wrist. These extension tubes are usually hollow tubes with a circular cross section and are most often made from steel, aluminum, or carbon fiber resin matrix materials. Steel tube extensions provide excellent deflection resistance, have very strong mounting surfaces, and are highly resistant to cracks and other damage which may be incurred if the robot arm or steel tube extension collides with objects erroneously left within the robot's working envelope. Unfortunately, the steel extension tubes are relatively heavy and may thus exceed the robot's capabilities. The steel extension tubes also have very low vibration damping, which causes significant bounce and vibration as the robot motion starts and stops, especially with heavier loads, longer extension tube lengths, and high acceleration and deceleration rates. Aluminum tube extensions are relatively lightweight, have strong mounting surfaces, and are highly resistant to cracks and damage. Unfortunately, the aluminum tube extensions have relatively high deflection and, like steel, have very low vibration damping. Carbon fiber resin matrix tube extensions are very lightweight, have excellent deflection resistance, and have excellent vibration damping. Unfortunately, the carbon fiber resin matrix tube extensions are very susceptible to cracks and damage and require high accuracy mounting configurations to prevent localized stress concentrations and related cracking and damage.

Thus, one of skill in the art understands that there is a clear need to provide improved tubular structures for robot arm tube extensions. Further, there is a clear need to provide robot arm tube extensions that provide all desired capabilities, including being lightweight, deflection resistant, comprise good internal damping, have strong mounting surfaces, and being resistant to cracks and other damage.

### Summary of the Invention

This disclosure provides for a tubular structure solving the above described and other shortcomings in the prior art. A tubular structure according to one embodiment of this invention may include an inner region, a middle region, and an outer region. The inner region may have a single layer tube. The middle region may have a sheet metal convolutely wound about the longitudinal axis of the inner region single layer tube. The outer region may have a single layer tube. Adhesive may bond the adjacent layers of the convolutely wound middle region. Adhesive may also bond the convolutely wound middle region to the inner region single layer tube and to the outer region single layer tube.

### Brief Description of the Drawings

The above-mentioned and other features and advantages of this invention, and the manner of attaining them, will become more apparent and the invention itself will be better understood by reference to the following description of embodiments of the invention taken in conjunction with the accompanying drawings, wherein:
FIG. 1 is a schematic side elevational view of an exemplary process for the manufacture of tubular structures consistent with this disclosure;

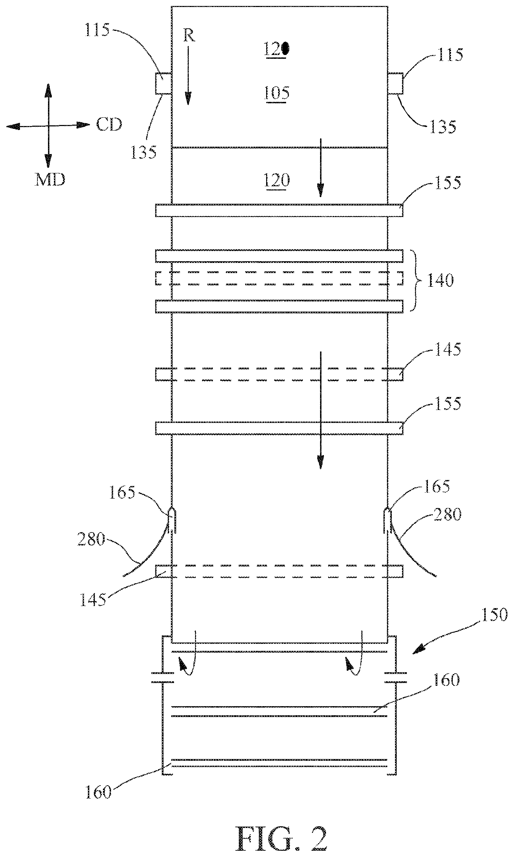

FIG. 2 is a top plan view of the process for the manufacture of tubular structures of FIG. 1;

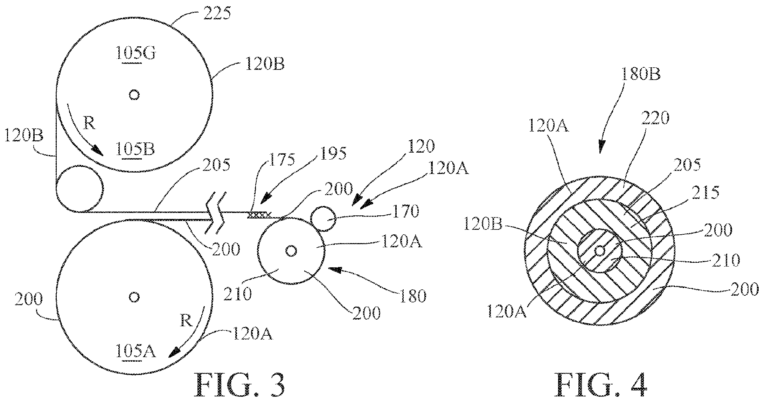

FIG. 3 is a side elevational view of another process for the manufacture of tubular structures;
FIG. 4 is a cross-sectional view of an exemplary convolutely wound tubular structure;

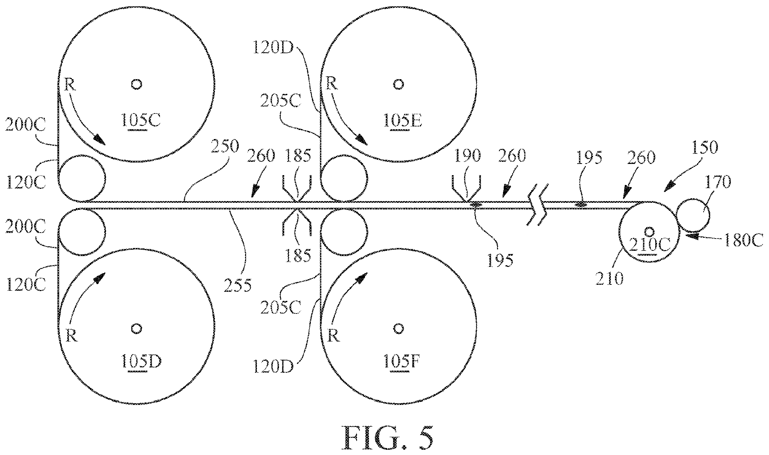

FIG. 5 is a side elevational view of yet another process for the manufacture of a tubular structure;

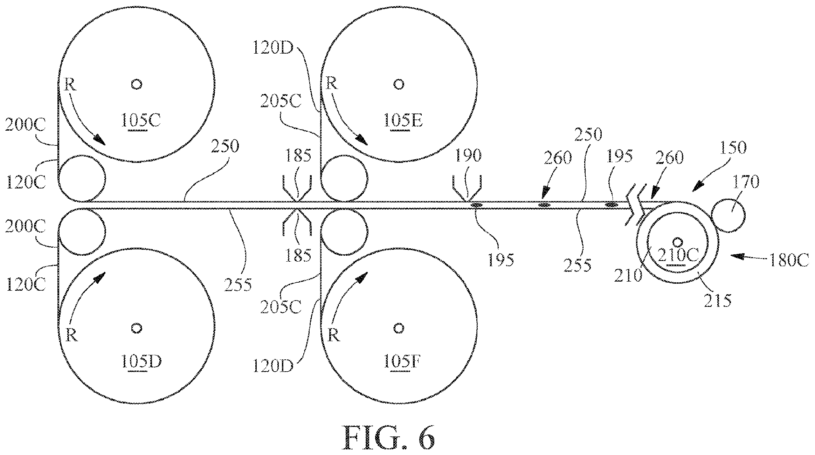

FIG. 6 is a side elevational view of still another process for the manufacture of a tubular structure;

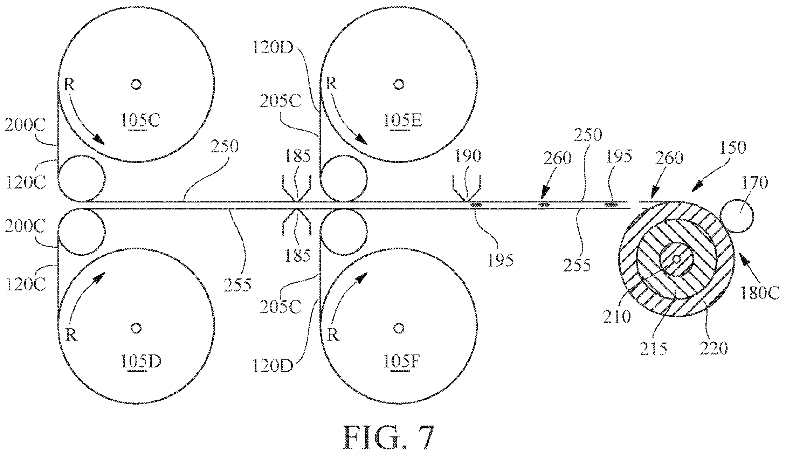

FIG. 7 is a side elevational view of yet another process for the manufacture of a tubular structure;
FIG. 8 is an elevational view of yet another convolutely wound tubular structure;
FIG. 9 is a cross-sectional view of the convolutely wound tubular structure of FIG. 8 taken along line 9-9;
FIG. 10 is a plan view of an exemplary metal sheet;
FIG. 11 is an elevational view of a convolutely wound tubular structure manufactured from the sheet metal of FIG. 10;
FIG. 12 is a plan view of another exemplary sheet metal;
FIG. 13 is an elevational view of a convolutely wound tubular structure manufactured from the sheet metal of FIG. 12;
FIG. 14 is a side elevational view of another process for the manufacture of a tubular structure;
FIG. 15 is a side elevational view of still another exemplary recoiler;
FIG. 16 is a side elevational view of yet another exemplary recoiler;
FIG. 17 is a side elevational view of an alternative recoiler;
FIG. 18 is a side elevational view of an exemplary process for creating protuberances and recesses in sheet metal;
FIG. 19 is an expanded view of the region labelled 19 in FIG. 18;
FIG. 20 is a perspective view of still another convolutely wound tubular structure;
FIG. 21 is a cross-sectional view of the convolutely wound tubular structure of FIG. 20 taken along lines 21-21;
FIG. 22 is a perspective view of still another convolutely wound tubular structure;
FIG. 23 is a perspective view of another convolutely wound tubular structure;

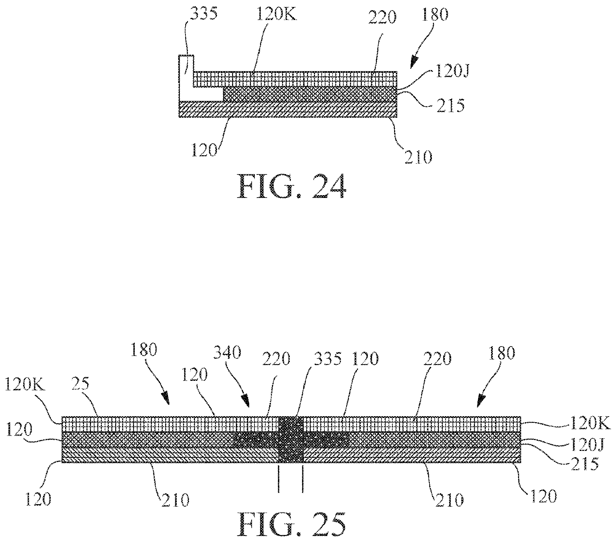

FIG. 24 is a cross-sectional view of a portion of a convolutely wound tubular structure showing a coupling matingly engaged therein;
FIG. 25 is a cross-sectional view of a portion of two coupled convolutely wound tubular structures;

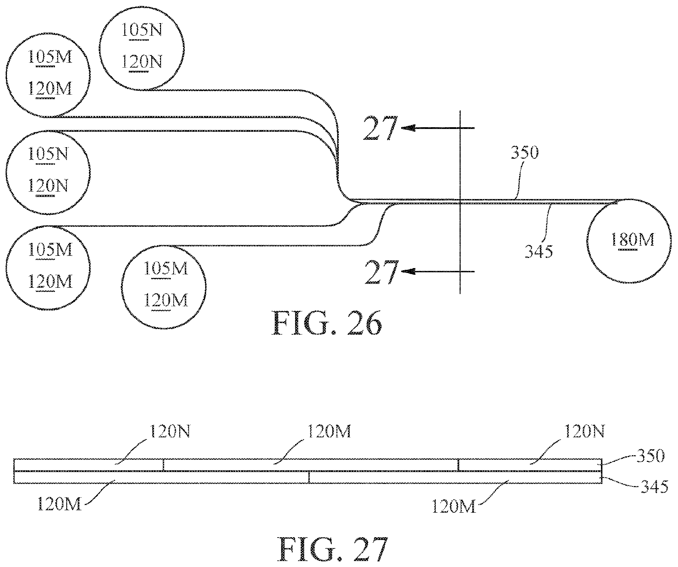

FIG. 26 is a side elevational view of still another process for the manufacture of a tubular structure;
FIG. 27 is a cross sectional view of a two-layer sheet metal configuration useful for the manufacture of an extended length tubular structure and manufactured according to the process shown in FIG. 26;
FIG. 28 is a cross sectional view of an additional embodiment of a tubular structure according to this invention;
FIG. 29 is a cross sectional view of a further embodiment of a process for making a tubular structure according to this invention;
FIG. 30 is a cross sectional view of a still further embodiment of a process for making a tubular structure according to this invention;
FIG. 31 is a cross sectional view of a yet further embodiment of a tubular structure according to this invention;
FIG. 32 is a cross sectional view of another embodiment of a tubular structure according to this invention;
FIG. 33 is a cross sectional view of yet another embodiment of a tubular structure according to this invention;
FIG. 34 is a cross sectional view of yet another embodiment of a tubular structure according to this invention;
FIG. 35 is a schematic representation of a vibration analyzing method for a tubular structure according to this invention;
FIG. 36 is a cross sectional view of a method of changing a shape of a tubular structure according to this invention; and
FIG. 37 is a side elevational view of a process for making a tubular structure according to this invention.

### Detailed Description of the Invention

As used herein, a "tubular structure" refers to a product that is generally symmetrically formed about a longitudinal axis and often has a high aspect ratio (length is much longer than the maximum cross-sectional dimension). A tubular structure may have a cross section that is circular, rectangular, square, or any other desired shape. As used herein, "convolutely wound tubular structure" refers to a tubular structure as defined supra which includes at least a portion of its cross-sectional profile constructed of a sheet of metal convolutely wound about the longitudinal axis. The convolutely wound tubular structure may include one or more portions of its cross-sectional profile that are not convolutely wound and/or constructed of a single layer of material which may or may not be similar to the material used in the convolutely wound portion of the structure. For the sake of clarity, such a single layer of material may be constructed of a homogenous or heterogenous material so long as a cross-sectional profile of such a layer is not multiple layers of a sheet of such material. One non-limiting example of a heterogeneous material is carbon fiber resin matrix material which has carbon fibers embedded in a resin.

The terms machine direction, cross-machine direction, and Z-direction are generally relative to the direction of a metal sheet 120 traveling through a manufacturing process. The "machine direction" is known to those of skill in the art as the direction of travel of the sheet metal 120 through the process. The "cross-machine direction" is orthogonal and coplanar thereto. The "Z-direction" is orthogonal to both the machine- and cross-machine directions.

### Sheet Metal Supply Coils and Sheet Metal

Although any re-coilable material can be used (i.e., metal or non-metal), one raw material for a tubular structure 180 of this disclosure is generally provided as a coil of relatively thin sheet metal. Embodiments of a tubular structure 180 according to this invention may be partially, entirely or not at all convolutely wound. A sheet metal is typically provided in a relatively thin form where the Z-direction dimension is substantially less than the machine- and cross-machine direction dimensions. A sheet metal may be convolutely wound about a core. The thickness of the sheet metal may be selected from a wide range of available gauges. In one non-limiting example, the sheet metal has a thickness of 0.002 inches to 0.100 inches (0.051 mm-2.540 mm). The width of the supply coils may also be selected from a wide range of available slit widths. In one non-limiting example, supply coils are used which have a width of 30 inches to 96 inches (0.762 meters 2.438 meters). The sheet metal may be selected to provide the desired properties of the tubular structure 180. Many metals are suitable and include, but are not limited to, carbon steel, stainless steel, metal alloys, titanium, cobalt, aluminum, brass, and copper. In one embodiment, the sheet metal 120 has a relatively high modulus of elasticity, ranging from 9,000,000 psi to 30,000,000 psi. In one non-limiting example, aluminum alloy 1235 sheet metal 120 with a modulus of elasticity of 10,000,000 psi, a thickness of 0.005 inches (0.127 mm), and a width of 72 inches (182.9 cm) is used to form a convolutely wound tubular structure 180. In a second non-limiting example, stainless steel alloy 304 sheet metal 120 with a modulus of elasticity of 28,000,000 psi, a thickness of 0.005 inches (0.127 mm), and a width of 72 inches (182.9 cm) is used to form a convolutely wound tubular structure 180. The sheet metal 120 may be prepared using various manufacturing methods known in the art to provide sheet metal 120 with the desired physical properties prior to being wound into supply coils. For example, carbon steel may be provided as cold rolled sheet metal coils, hot rolled sheet metal coils, or galvanized sheet metal coils. In another example, stainless steel 304 which has been fully hardened by cold working processes may be provided in metal coils.

In an alternative embodiment, the re-coilable material may include non-metal materials. Non-limiting examples of non-metal materials include carbon fiber resin matrix, fiberglass, high strength plastics such as high density polyethylene, and graphene. These materials may provide desirable density and weight reductions relative to metals while still providing acceptable levels of deflection resistance and vibration damping.

### Unwinding

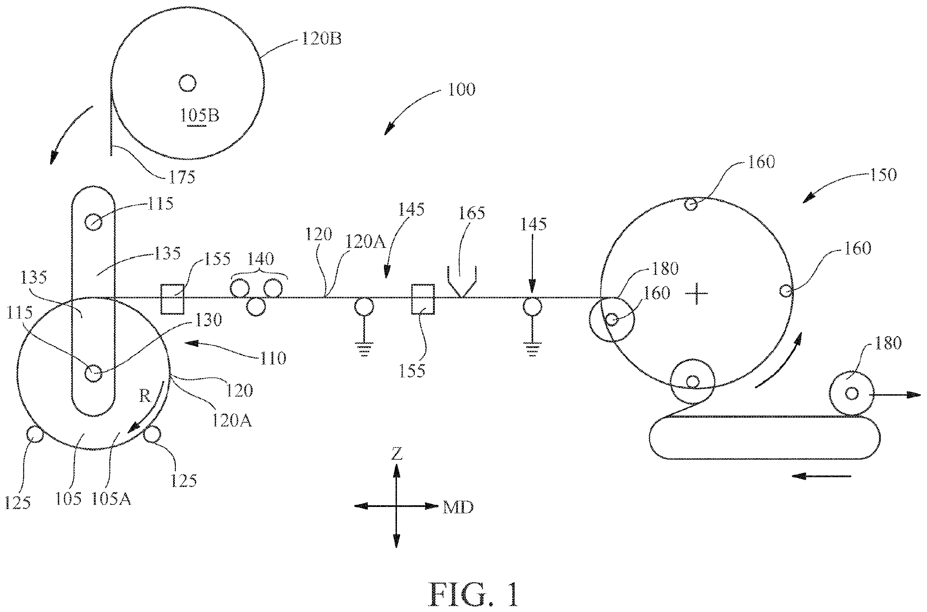

As shown in FIG. 1, a process 100 for making tubular structures 180 may provide for the sheet metal supply coils 105 to be loaded onto a mandrel 115 of an uncoiler apparatus 110 that supports the sheet metal supply coils 105 while rotating them in the direction, R, that unwinds the sheet metal 120 disposed convolutely about the supply coil 105 and feeds the sheet metal 120 to downstream processing operations. The exterior circumferential surface of the supply coil 105 can be supported by rollers 125 positioned underneath the supply coil 105 where the longitudinal axis of each support roller 125 is parallel to the longitudinal axis 130 of the supply coil 105. Each support roller 125 may be driven to rotate and unwind the supply coil 105.

A support mandrel 115 may be inserted through the core of the supply coil 105. The support mandrel(s) 115 can be inserted into a respective supply coil 105 and affixed to the uncoiler apparatus 110 core via mounting arms 135 sized to engage both ends of the core of the supply coil 105. Both ends of the support mandrel 115 may be supported within the uncoiler apparatus 110 and the mandrel may be connected to a motor to rotate the supply coil 105 and unwind the sheet metal 120. Both support rollers 125 and a support mandrel 115 may be used to support the supply coil 105. Other uncoiling or unwinding apparatus configurations known to those of skill in the art may also be used to perform the supply coil 105 unwinding operation.

### Sheet Metal Conveying and Web Handling

After the sheet metal 120 is unwound from the supply coil 105, it is conveyed through downstream operations until it is wound in the recoiler 150 to create the desired tubular structure 180. Driven or non-driven rollers 140 and stationary supports 145 may be used to support and convey the sheet metal 120 while defining the web path throughout the manufacturing process 100. In one embodiment, the sheet metal 120 processing components are mounted such that their longitudinal axes are level within relatively close tolerances (e.g., level across the entire length +/-0.002 inches or +/-0.051 mm) to ensure consistent tracking of the sheet metal 120 throughout the manufacturing process 100.

In one embodiment, all sheet metal 120 processing components used in the manufacturing process 100 are mounted with their longitudinal axes parallel to one another within relatively close tolerances (e.g. +/-0.002 inches or +/-0.051 mm) to provide consistent tracking of the sheet metal 120 throughout the manufacturing process 100. Tension of the sheet metal 120 can be controlled to provide uniform processing operations. Suitable tension control methods known in the art include, but are not limited to, magnetic particle brakes controlled to provide a consistent torque, sheet metal accumulation zones (e.g., a single accumulation loop within a pit between unit operations), sheet metal festoon accumulators, dancers, and load cells which may be used to regulate relative speeds between consecutive unit operations. Other sheet metal tension control techniques known to those of skill in the art may also be used.

In one embodiment, the tension on the sheet metal 120 can be controlled with load cells 155 that detect the tension and force within the sheet metal 120 at desired location(s) within the process 100, comparing the force to a target, and adjusting the relative speed of any adjacent sheet metal 120 conveying devices used in the manufacturing process 100 to maintain the target force and tension within the sheet metal 120. In this regard, one of skill in the art can provide a suitable tension control algorithm that compares an actual tension in the sheet metal 120 with a desired target tension to determine a tension adjustment factor. The tension adjustment factor can then be applied to the manufacturing process 100 equipment to provide for an adjustment of the speed of the sheet metal 120 by process control equipment to provide for a corrected sheet metal 120 speed and thereby adjust the sheet metal 120 tension. Such a process can be accomplished in-situ or by any off-line process suitable for one of skill in the art.

### Winding Mandrels

The process 100 for making tubular structures 180 provides for a sheet metal 120 to be attached to a winding mandrel 160. The winding mandrel 160 may comprise an inner region single layer tube 102 and become a component of the finished tubular structure 180. In an alternative embodiment in which the inner region single layer tube is not used in the tubular structure, the winding mandrel 160 is a replaceable support that defines the interior cross sectional shape and size of the desired tubular structure 180. The mandrel 160 as the inner tube 102 may be fabricated to provide the desired length, cross-sectional shape, and cross-sectional dimensions of the tubular structure 180 to be produced. The mandrel 160 can be slightly longer than the width of the sheet metal 120 used to form the tubular structure 180. The inner tube 102 shape may be selected to provide the desired cross-sectional shape of the interior of the tubular structure 180, including but not limited to, circular cross-sections, polygonal cross-sections (e.g., triangular, rectangular and/or square), elliptical cross-sections, and combinations thereof. The cross-sectional dimensions of the inner tube 102 may be selected to provide the desired interior cross-sectional dimensions of the tubular structure 180. For example, the inner tube 102 may be circular and have an outside diameter equal to 1 inch. Alternatively, it may be circular and have an outside diameter equal to 12 inches. Yet still, the mandrel 160 as the inner tube 102 may be rectangular and comprise outside dimensions equal to 4 inches by 8 inches. The mandrel 160 or inner tube 102 design is very flexible and can provide a very wide range of tubular structure 180 interior cross sectional shapes and sizes, thereby eliminating a major constraint in prior art fabrication processes for tubular structures 180.

Mandrel 160 may be designed to provide for the leading edge 175 of the sheet metal 120 forming tubular structure 180 to be disposed thereupon and/or attached thereto. An adherence force should be sufficient to maintain the desired sheet handling tension and prevent slippage between the sheet metal 120 and the mandrel 160 surface as the sheet metal 120 is convolutely disposed about the mandrel 160 in the first revolution as the winding process 100 begins.

For embodiments in which the mandrel 160 comprises the single layer inner tube 102 which becomes a component of the finished tubular structure 180, two-sided tape 104 may be applied to the top surface of the leading edge 175 of sheet metal 120 prior to attaching the sheet metal 120 to the mandrel 160. The sheet metal 120 may subsequently be compressed against the mandrel 160 by adjustable rider roll 170, thereby providing contact force between the top surface of the leading edge 175 of sheet metal 120 and the mandrel 160. The bond strength of the two-sided tape 104 is selected to be sufficient to ensure attachment of the leading edge 175 of sheet metal 120 to the mandrel 160. In an alternative embodiment in which the inner region single layer tube is not used in the tubular structure 180, vacuum ports 106 may be provided within the surface of the mandrel 160. The force exerted by the vacuum level provided by the vacuum ports 106 may be sufficient to provide the desired holding force between the sheet metal 120 and the mandrel 160. The vacuum force may be maintained for the initial portion of the process 100 and then turned off when no longer needed. After the winding process 100 is complete, positive air pressure may be provided through the ports 106 to enable removal of the convolutely wound tubular structure 180 from the winding mandrel 160.

A first end of the mandrel 160 can be coupled to a motor to provide the rotation force for the winding process 100. The second end distal from the first end of the mandrel 160 can be supported throughout the winding process 100. The second end support can be disengaged and repositioned a distance to remove the convolutely wound tubular structure 180 from the mandrel 160 after the winding process 100 is complete.

Mandrels 160 can be fabricated from a wide range of materials and by using methods known in the art. Using fabrication capabilities known in the art, mandrels 160 may be produced to provide the desired tubular structure interior dimension to a very accurate level. For example, the mandrel 160 length and cross sectional dimensions can be +/-0.001 inches (+/1 0.025 mm) from the target. Mandrels 160 can be made for each desired cross sectional shape and size combination and re-used during production of tubular structures 180 to have the desired interior cross-sectional shape and size.

### Center Winding

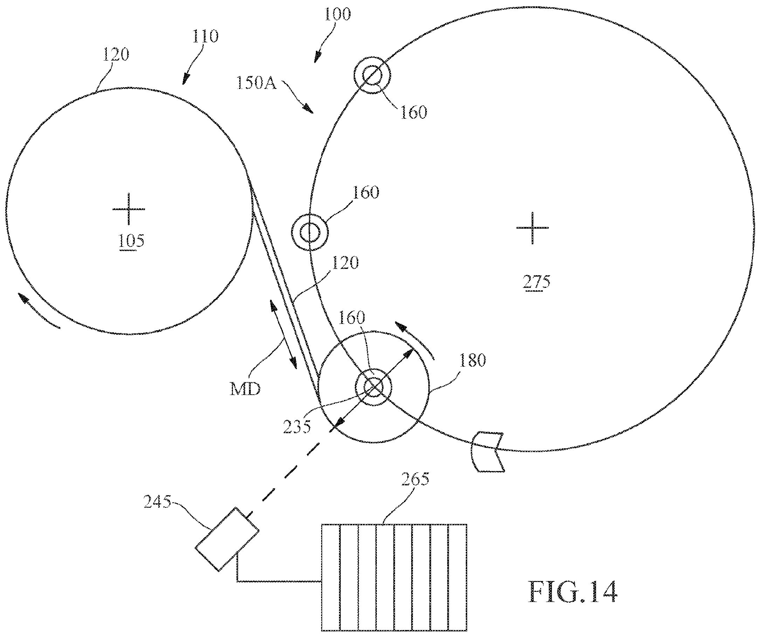

As shown in FIG. 14, one embodiment of the process 100 for making tubular structures 180 provides for a tubular structure 180 to be formed by convolutely winding a sheet metal 120 about the longitudinal axis of the tubular structure 235 while the winding force is transmitted from a motor to a winding mandrel 160. In this configuration, known in the art as center winding, the rotating speed of the mandrel 160 is controlled to provide a uniform surface speed at the point where the incoming sheet metal 120 first contacts the winding tubular structure 180, from the beginning of the winding cycle through the completion of the winding cycle.

Recoiler 150A can provide for a plurality of mandrels 160 to be disposed upon a turret 275 that is rotatable about a rotational axis. In this manner, a sheet metal 120 supplied from supply coil 105 from uncoiler 110 can be convolutely wound about a first mandrel 160 while a second mandrel 160 is disposed in a position to receive sheet metal 120 after the tubular structure 180 disposed upon the first mandrel 160 is complete and rotated away from a defined winding position. In other words, when the tubular structure 180 being formed from sheet metal 120 about a first mandrel 160 disposed upon the turret 275 is completed (e.g., has attained a desired thickness), the sheet metal 120 can be severed forming a first tail portion, the first tail portion can be attached to the previous convolution of tubular structure 180, the mandrel 160 having the tubular structure 180 disposed thereabout can be rotated away from a winding position, turret 275 can be rotated about its rotational axis to position a new mandrel 160 into the winding position, and the leading edge of the severed sheet metal 120 can be fixedly disposed upon, or attached to, the new mandrel 160. This can provide a nearly continuous production of tubular structures 180.

The desired speed profile can be pre-calculated for a given tubular structure 180 geometry. The variables that define the speed profile include the sheet metal 120 incoming speed, the tubular structure 180 interior cross-sectional dimension, the tubular structure 180 exterior cross-sectional dimension, the length of sheet metal 120 being wound, and the thickness of the sheet metal 120 being wound. In embodiments where the sheet metal 120 is deformed out-of-plane for portions of the tubular structure 180 wall, the average in-wound thickness of the deformed sheet metal 120 (which may include some compression) is used for the thickness value for that portion of the speed profile.

A laser measurement system 245 (or any desired measurement system) can be used to measure the outer diameter of the tubular structure 180 as it is being wound. A controller 265 can be operatively and/or communicatively coupled to the laser measurement system 245 as well as the equipment associated with the formation of tubular structure 180 to control when each discrete unit operation is activated or deactivated during the tubular structure 180 formation process 100.

For example, a tubular structure 180 can be a circular robot tube extension having an inside diameter of 2.5 inches and an outside diameter of 3 inches. The incoming sheet metal 120 is undeformed, has a uniform thickness of 0.005 inches, and has a speed at the recoiler 150 of 500 feet per minute. The wall thickness of the tubular structure 180 may be calculated using the formula:$\left(Outside Diameter-Inside Diameter\right) / 2 Sides$ In this example: (3 inches-2.5 inches)/2=0.25 inches

The number of mandrel 160 revolutions required to form the tubular structure may be calculated using the formula:
Wall Thickness/Sheet Metal Thickness
In this example: 0.25 inches/0.005 inches=50 revolutions

The outside diameter of the winding tubular structure after "Y" revolutions may be calculated using the formula: $Inside Diameter + \left(Y\times Sheet Thickness\times 2 Sides\right)$
In this example after 10 revolutions: 2.5 inches+(10×0.005 inches×2)=2.6 inches
In this example after 50 revolutions: 2.5 inches+(50×0.005 inches×2)=3 inches
In this example after 100 revolutions: 2.5 inches+(100×0.005 inches×2)=3.5 inches

The required rotational speed of the mandrel 160 to maintain a uniform surface speed at the point where the incoming sheet metal first contacts the winding tubular structure 180 may be calculated using the formula: 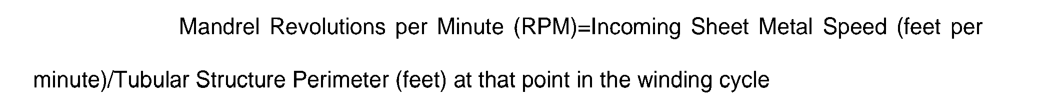
Mandrel Revolutions per Minute (RPM)=Incoming Sheet Metal Speed (feet per minute)/Tubular Structure Perimeter (feet) at that point in the winding cycle
After 0 revolutions: Mandrel RPM=500/(2.5 inches×π/12 inches/feet)=763.94
After 10 revolutions: Mandrel RPM=500/(2.6 inches×π/12 inches/feet)=734.56
After 50 revolutions: Mandrel RPM=500/(3 inches×π/12 inches/feet)=636.62
After 100 revolutions: Mandrel RPM=500/(3.5 inches×π/12 inches/feet)=545.67

One of skill in the art may use such calculations to create a target speed profile for all points in the process 100 for the tubular structure 160. Motor controllers known in the art may use such speed profiles to regulate the motor and mandrel 160 rotational speeds at all points throughout the winding cycle, thereby providing a reliable means for winding the desired tubular structure 180.

A similar approach may be used to control the winding speed of a non-circular tubular structure 180, such as one comprising a rectangular or square interior cross-section. The calculations are similar, although the formulae for determining the instantaneous outside diameter or perimeter must be altered to account for the difference in geometry between the desired interior cross-section and the circular cross-sectional example described above.

### Surface Winding

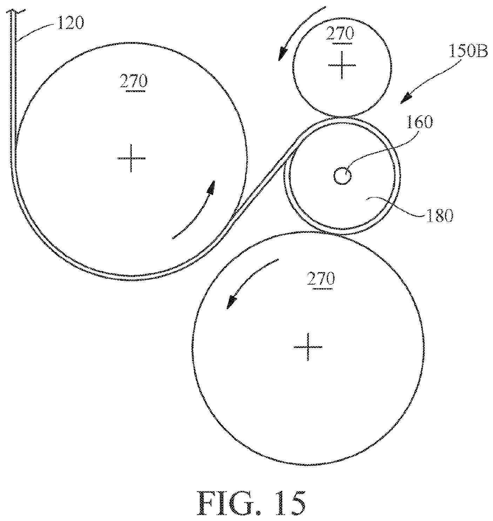

As shown in FIG. 15, an alternative embodiment of a process 100 for making tubular structures 180 provides for a tubular structure 180 to be formed by convolutely winding the sheet metal 120 about the longitudinal axis 236 of the tubular structure 180 while the winding force is transmitted from a motor or motors to at least two winding rollers 270 that contact the surface of the tubular structure 180 as it is being wound. This configuration is known as surface winding as the driving force for winding is provided exclusively through the surface of the tubular structure 180 as it is wound. Three winding rollers 270 contact and provide a driving force to the surface of the winding tubular structure 180. Two of the winding rollers 270 may be positioned underneath the winding tubular structure 180 and spaced apart a distance to provide a stable cradle-like support system. A third winding roller 270 may be positioned to contact the tubular structure 180 at or near its uppermost perimeter. The longitudinal axes of the three winding rollers 270 are generally parallel to the longitudinal axis 236 of the winding tubular structure 180. All three winding rollers 270 can be driven by one or separate motors to provide matched surface speeds. All three winding rollers 270 can be mounted in a manner which allows enough movement to maintain contact with the increasing outer dimensions of the winding tubular structure 180 throughout the entirety of the winding process 100. The third winding roller 270 can be provided with a capability to exert a substantial force generally perpendicular to the sheet metal 120 being wound and compress the sheet metal 120 against the winding tubular structure 180. Further, each of the three winding rollers 270 may be provided with a relatively rigid surface (e.g., metal), a deformable surface (e.g., a rubber cover), or any desirable combination thereof.

The three winding roller 270 configuration described above can work well when winding circular tubular structures 180. The surface winding system has limitations, however, when winding non-circular tubular structures 180. The significant outer dimension position variations within each revolution inherent with such non-circular structures can require relatively complex and simultaneous movement of the three winding rollers 270 to maintain contact with the outer surface of the winding tubular structure 180. Center winding or hybrid winding processes may be better suited for the production of non-circular tubular structures 180.

### Hybrid Winding

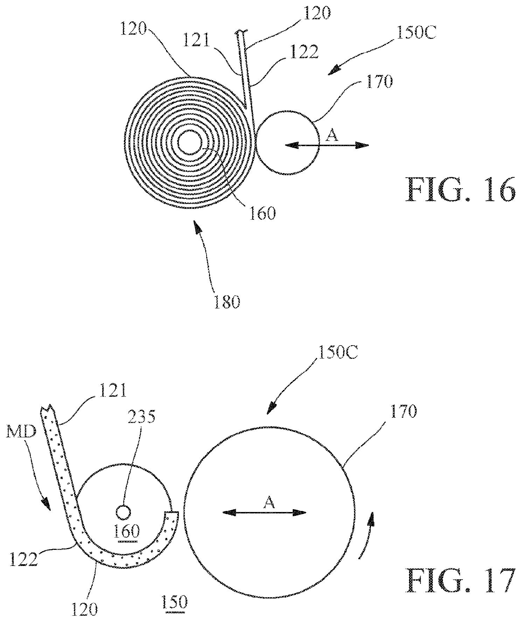

As shown in FIGS. 16-17, another alternative embodiment of a process 100 for making tubular structures 180 provides for a tubular structure 180 to be formed by recoiler 150C that convolutely winds a sheet metal 120 about the longitudinal axis of the tubular structure 235 while the winding force is transmitted from a motor to a winding mandrel 160 disposed upon turret 275. A supplemental driving force is transmitted to the exterior surface of the tubular structure 180 by a driven rider roll (i.e., adjustable pressure roll 170). In an alternative embodiment, the adjustable pressure roller 170 is not driven. These configurations are known as hybrid winding as it combines elements of center winding with a surface driven or surface contact component. The position of adjustable pressure roll 170 is adjusted in the direction, A, to provide enough pressure upon the sheet metal 120 being convolutely wound about mandrel 160 to provide a desired winding pressure upon tubular structure 180 as it is being formed. In addition to providing supplemental driving force to the winding tubular structure 180, the adjustable pressure roll 170 may be loaded against the tubular structure 180 with a desired force. This perpendicular force applicable in a direction, A, relative to tubular structure 180, may provide an improved bonding force when adhesive is used to bond adjacent layers of sheet metal 120. The perpendicular force may also ensure uniform contact between the incoming sheet metal 120 and the winding tubular structure 180 by forcing out entrained air and preventing side-to-side wandering of the incoming sheet metal 120.

In the hybrid winding configuration 150C, the rotational speed of the mandrel 160 is controlled throughout the winding process as described in the above center winding description. The adjustable pressure roll 170 in this winding configuration is mounted with its longitudinal axis parallel to the longitudinal axis of the mandrel 160. The adjustable pressure roll 170 may be selected to have a suitable diameter to minimize deflection during operation, wherein it exerts a substantial force that is generally orthogonal to the winding sheet metal 120. The mounting configuration of the adjustable pressure roll 170 should allow sufficient movement so that contact between the adjustable pressure roll 170 and the tubular structure 180 may be maintained through the entirety of the winding cycle, from minimum tubular structure 180 exterior geometrical dimensions to maximum tubular structure 180 exterior geometrical dimensions.

The bearing housings at each end of the adjustable pressure roll 170 are mounted to arms that are connected via pivot pins to a frame. Linear actuators can be used to control movement of each end of the adjustable pressure roll 170, around the corresponding pivot, to produce a compressive loading force between the sheet metal 120 and the winding tubular structure 180. In one embodiment, the adjustable pressure roll 170 contacts the winding tubular structure 180 at or slightly downstream of the tangent point of the incoming sheet metal 120. Further, the adjustable pressure roll 170 loading force against the winding tubular structure 180 can be controlled to a desired level and maintained at that level throughout the entirety of the winding process. Linear actuators can provide a suitable means for independently controlling the loading force at both ends of the adjustable pressure roll 170 assembly.

The adjustable pressure roll 170 can have a relatively rigid surface, such as metal, or a deformable surface, such as a rubber cover. The adjustable pressure roll 170 can be driven by a motor that maintains a matched or nearly matched surface speed between the surface of the adjustable pressure roll 170 and the surface speed of the winding tubular structure 180. In an alternative embodiment, the adjustable pressure roll is not driven but is free to rotate at a surface speed which substantially matches the surface speed of the winding tubular structure 180.

### Convolute Winding

Each of the center winding, surface winding, and hybrid winding processes described supra may be used to provide a convolutely wound tubular structure 180. In these convolute winding processes, the sheet metal 120 machine direction is orthogonal to the longitudinal axis of the wound tubular structure 180. One side of sheet metal 120 may comprise a first edge. The opposite side of sheet metal 120 may comprise a second edge. The orthogonal configuration of convolute winding aligns the first edges and second edges of sheet metal 120 in all layers of the wound tubular structure such that the first edge of sheet metal 120 in any layer of the wound tubular structure overlies the first edge of sheet metal 120 in any radially adjoining layers of the tubular structure and the second edge of sheet metal 120 in any layer of the wound tubular structure overlies the second edge of sheet metal 120 in any radially adjoining layers of the tubular structure. A convolutely wound tubular structure inherently comprises a wound tubular structure length that is substantially equal to the width of the sheet metal 120. A convolutely wound tubular structure comprises a continuous region of sheet metal 120 along the entire longitudinal axis of the tubular structure in each layer of the convolutely wound tubular structure and has a higher deflection resistance.

In an alternative embodiment, tubular structures may be formed by helical winding, wherein sheet metal 120 can be wound about a longitudinal axis offset at an angle substantially less than 90 degrees relative to the machine direction centerline of the incoming sheet metal 120. This winding configuration can be known as helical, or offset, winding. Multiple, relatively narrow strips of sheet metal 120 are fed onto a stationary mandrel at a relative angle of approximately 45 degrees. Each strip of sheet metal 120 is wound so adjacent edges are in edge-to-edge contact, leaving no significant gap between adjacent sheet edges and no overlap with the preceding wound strip. Alternatively, some overlap between adjacent sheet edges is provided. Flexible narrow belts are driven by a motor and are wrapped around a significant portion of the winding strips to provide surface driven rotation of the winding sheet metal strips around the mandrel and simultaneous translation of the winding tubular structure toward the downstream end of the mandrel.

Each sheet metal strip forms a layer of the desired tubular structure . Separate metal strips and related uncoiling and web handling processes can be required for each sheet metal strip. This manufacturing method produces tubular structures with multiple sheets and edges along the longitudinal axis of the tubular structure. While this helical winding method provides some manufacturing efficiencies, the helically wound tubular structures have substantially lower deflection resistance for the tubular structure 180 for robot arm tube extensions.

### Interior Dimension, Wall Thickness, and Outer Dimension Flexibility and Accuracy

One advantage of various embodiments of the current invention relative to prior art is the unprecedented flexibility to produce tubular structures 180 with a very wide range of interior dimension, wall thickness, and exterior dimension combinations. As described supra, nearly any desired tubular structure 180 interior cross sectional shape and size can be provided by an appropriately designed winding mandrel 160. Once the winding process 100 is initiated by wrapping the incoming sheet metal 120 around the winding mandrel 160, the winding process 100 continues until the desired wall thickness and exterior dimensions are produced, at which point the winding process is terminated, and the sheet metal 120 is cut off. The winding process 100 can be easily terminated only two or three winding revolutions after the start of the winding process, thereby producing a relatively thin wall for the tubular structure 180. If desired, the winding process 100 may also continue for a relatively extended period after the winding process 100 is initiated before the process 100 is terminated, and the sheet metal 120 is cut off. In this latter method, a very thick wall tubular structure 180 may be produced.

In one embodiment, the outer dimensions of the winding tubular structure 180 can be measured throughout the entire winding process 100. Measurement systems are known in the art to continuously measure the outer dimensions of the winding tubular structure 180. For example, a digital micrometer can contact the winding structure and provide an accurate measurement (+/-0.001 inches or 0.025 mm) of the wound wall thickness. Further, non-contact laser triangulation measurement systems can be used to scan the winding tubular structure 180 and provide an accurate measurement (within 0.001 inches or within 0.025 mm) of the wound wall thickness. Measurement systems may be used to monitor the winding process 100 and provide a winding termination signal when a target wall thickness and corresponding outer dimensions of a tubular structure 180 have been produced.

The process 100 can provide both unprecedented flexibility for the cross-sectional shape and size of tubular structures 180 and very accurate production of the desired interior cross sectional dimensions, wall thickness, and cross sectional exterior dimensions. All three parameters may be controlled within very tight tolerances over a wide size range. In one nonlimiting embodiment, a tubular structure is formed wherein the average outer diameter of the tubular structure is 2.000 inches (50.8 mm). The outer diameter of the tubular structure may be controlled to be 2.000 inches (50.8 mm) +/- 0.010 inches (0.254 mm) along the entire length of the tubular structure.

### Cross-Machine Direction Registration of Sheet Metal Features

In one embodiment, features of convolutely wound tubular structures 180 may be aligned in the cross-machine direction to maintain relative registration along the tubular structure 180 longitudinal axis 236. For example, discrete voids 230 can be created with a void generation system 240 in the sheet metal 120 by laser cutting prior to winding. The cross-machine direction spacing of the voids 230 can be controlled to ensure the voids 230 are aligned axially after being wound into the tubular structure 180. To ensure the voids 230 remain aligned, means can be implemented to maintain cross-machine direction alignment of such features from the point they are generated in the sheet metal 120 until they are wound into the tubular structure 180.

In one embodiment, in-line leveler and sheet metal 120 tension control mechanisms known in the art can be used to provide a smooth, level sheet under consistent tension. Consistent tension may be maintained from the point where a sheet metal 120 feature such as voids 230 are produced through the manufacturing process 100. In addition, sheet spreading devices such as herringbone spreader rolls and bowed spreader rolls, both known in the art, may be used to spread the sheet metal 120 to further ensure the surface is flat and smooth.

The overall width of the sheet metal 120 may be continuously measured by monitoring the sheet edge position with a non-contact device such as ultrasonic or infrared scanners, both known in the art, at each side of the sheet metal 120. The same devices may be used to compare the sheet edge position to a desired edge position. This information can be used to control an uncoiler 110 sidelay device, known in the art to be capable of moving the supply coil 105 of sheet metal 120 in the cross machine direction, to maintain a centered sheet alignment or to maintain one sheet edge at a target cross machine position.

Any combination of the above devices may be used to control the sheet metal 120 as it is processed. In one embodiment, all the mechanisms are used to maintain a smooth, flat sheet metal 120 surface, control the sheet tension to a uniform level, and align at least one sheet edge to a target cross machine position. The cross-machine direction alignment of sheet features may be controlled and maintained from the point they are introduced into the sheet metal 120 until they are wound into the tubular structure 180 in the recoiler 150.

### Machine Direction Registration of Sheet Metal Features

The machine direction spacing of some features of convolutely wound tubular structures 180 may be controlled to maintain relative registration in the circumferential direction within a rewound tubular structure 180. For example, if discrete circular voids 230 are created in the sheet metal 120 by laser cutting prior to winding into a convolutely wound robot tube extension, the machine direction spacing of the voids 230 can be continuously adjusted to maintain circumferential registration of the voids after being wound. Maintaining the machine direction spacing of such features from the point they are generated in the sheet until they are wound into the convolutely wound robot tube extension can ensure the voids 230 remain aligned.

The machine direction spacing of discrete circular voids 230 can be increased from the first generated void to each successive void within the convolutely wound robot tube extension . The increase in machine direction spacing between a first void and a second successive void that overlies the first void may be pre-determined and based on the thickness of the sheet metal 120 and the diameter of the convolutely wound robot tube extension at that point in the winding process. The circumferential spacing of successive voids 230 can increase according to the increase in the structure's diameter at that point in the wind. The circumference of the convolutely wound robot tube extension 235 at any point in the wind may be determined by the formula:$Tube Circumference = Tube Diameter \times π .$

The increase in tube diameter from a first layer to a successive layer may be determined by the formula:
$Tube Diameter \left(2\right) = Tube Diameter \left(1\right) + \left(Sheet Metal Thickness\times 2 sides\right) .$

Once the circumferential spacing increase has been determined, the activation timing of the laser that creates the void may be appropriately adjusted.

One skilled in the art may use this procedure, or a suitably modified procedure, to control the machine direction spacing of sheet metal features to maintain any desired circumferential registration of such features once they are rewound into a tubular structure.

### Coaxial Void Creation

Tubular structures 180 having improved strength-to-weight properties may be desired and/or required. Here, at least a portion of the convolutely wound tubular structure may be formed with a net structural density that is substantially less than the density of the constituent sheet metal material used to form the convolutely wound middle region of the tubular structure. At least a portion of the convolutely wound tubular structure may also be formed with a net structural density that is less than the density of the outer region single layer tube material. At least a portion of the convolutely wound tubular structure may also be formed with a net structural density that is also less than the density of the inner region single layer tube material. The reduced density portion of the tubular structure wall may be designed to optimize any desired mechanical property or combination of mechanical properties of the tubular structure. This includes, but is not limited to, mass, weight, shear strength, axial tensile strength, axial compression strength, torsional strength, modulus of elasticity in a desired plane or orientation, internal vibration damping, mounting surface strength, and resistance to cracks and other damage.

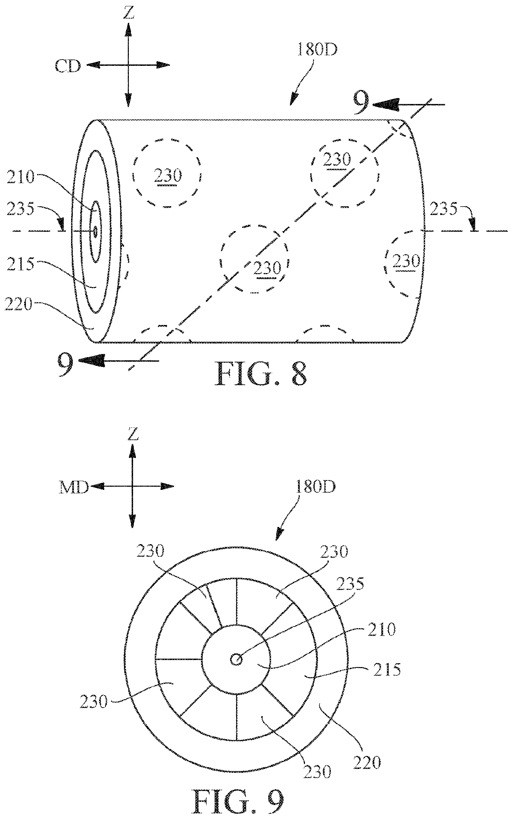

FIGS. 8 and 9 provide an exemplary tubular structure 180D with improved strength-to-weight properties. The tubular structure 180D may be produced by convolutely winding a sheet metal comprising pre-formed voids 230 to form at least a portion of the tubular structure 180D. For example, a first inner region 210 of the tubular structure 180 can be formed by convolutely winding a homogenous sheet metal around the longitudinal axis 236 of the tubular structure 180D. A second region 215 of the tubular structure 180D is then formed by winding a second sheet metal having pre-formed voids 230, such as circles, around the first inner region 210 about the longitudinal axis 236 of the tubular structure 180D by overlying the first sheet metal. A perforated sheet metal having a total void area of 30% to 80% can be used to form at least a portion of the second region 215 of the tubular structure 180D. A third region 220 of the tubular structure 180D is then formed by winding the first homogenous sheet metal around second region 215 about the longitudinal axis 236 of the tubular structure 180D and overlying the second sheet metal until the desired wall thickness and the desired outer dimensions of the tubular structure 180D are attained. The tubular structure 180D formed in this manner can have a surprisingly substantially lower total mass with a relatively minor decrease in strength, modulus of elasticity, and pressure rating. This type of improved strength-to-weight tubular structure 180D may be especially useful in aeronautical, space, and inter-stellar applications.

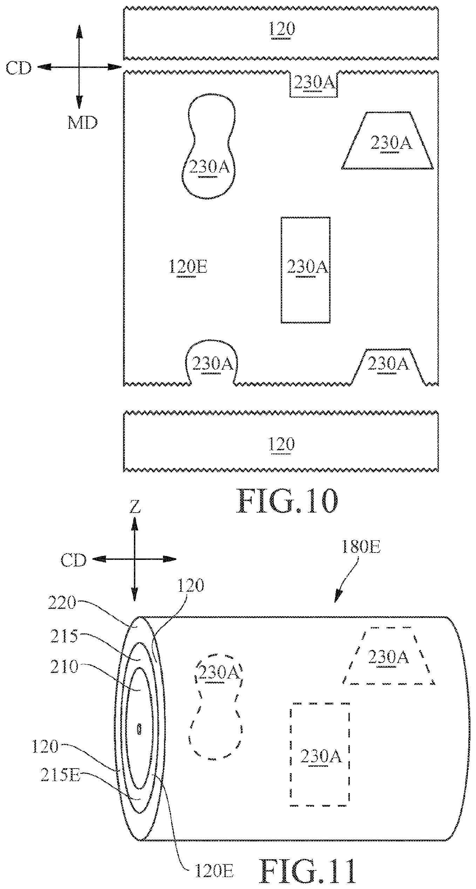

As shown in FIGS. 10 and 11, a tubular structure 180E with improved strength-to-weight properties may be produced by unwinding a homogenous sheet metal 120, forming voids in situ in selected portions of the sheet metal 120 with a void generation system 240 to form a sheet metal 120E portion having voids disposed therein, and then winding the sheet metal 120E into tubular structure 180E. In a non-limiting example, the voids 230A can be registered in the cross-machine direction but unregistered in the machine direction. A first sheet metal 120 supplied in a first sheet metal supply coil 105 is unwound in an uncoiler apparatus 110 and fed into a downstream recoiler 150 where it is convolutely wound to form the first inner region 210 of the tubular structure 180E. After the first inner region 210 of the tubular structure 180E is formed, voids 230A are generated in the sheet metal 120 to form a sheet metal 120E having voids disposed therein prior to winding the sheet metal 120E to form the second region 215 of tubular structure 180E.

Voids 230A can be generated to form sheet metal 120E portion by mechanical contact operations such as punching or cutting. The punching or cutting operations may remove discrete portions of sheet metal 120E to reduce mass while still maintaining substantial material continuity in both the machine- and cross-machine directions. Alternatively, voids 230A can be generated to form sheet metal 120E by non-mechanical cutting operations such as water jet cutting or laser cutting. Water jet and laser cutting systems are known in the art and can be effective in cutting sheet metal. Both water jet and laser cutting systems also have advantages for quickly and easily changing the void size, shape, or spacing. Since no mechanical tooling is used in these systems, they are more flexible and can quickly make changes via programming to control the position of the device that cuts the sheet metal 120E. Other metal cutting techniques known in the art may also be used to generate voids 230A. The position, size, shape, and spacing of the discrete voids 230A can be selected to provide a reduced mass and preservation of mechanical properties such as strength, modulus of elasticity, and surface hardness. After the second region 215 of the tubular structure is formed with the sheet metal 120E, the void generation system 240 can be de-activated. The homogenous first sheet metal 120 can then be wound to form the third region 220 of the tubular structure 180E. It may be preferable to bond at least a portion of the adjacent layers within the inner 210, second 215, and outer 220 regions of the tubular structure 180E as discussed infra . The tubular structure 180E can have substantially lower total mass with a relatively minor decrease in strength, modulus of elasticity, and internal vibration damping. This type of improved strength-to-weight tubular structure 180E may be especially useful in aeronautical and space applications.

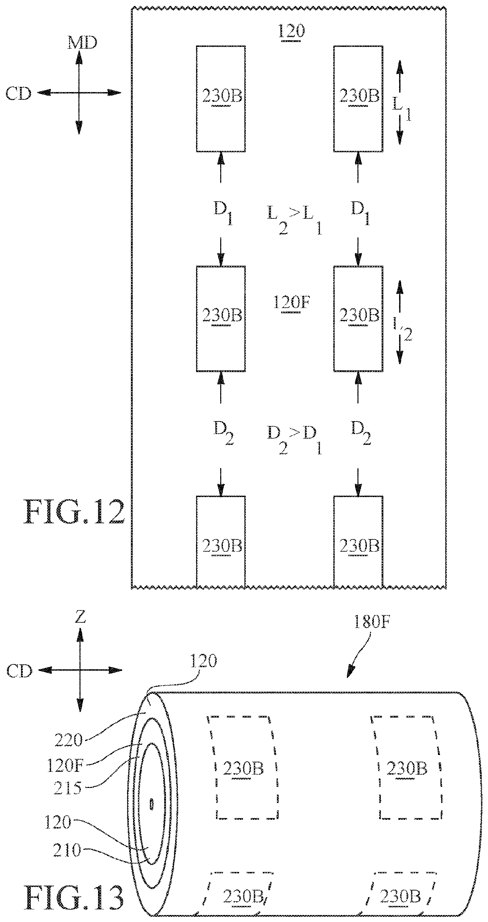

Alternatively, as shown in FIGS. 12-13, a tubular structure 180F with improved strength-to-weight properties may be produced by unwinding a homogenous sheet metal 120, forming voids 230B in the sheet metal 120 to form a sheet metal 120F, and winding the first sheet metal 120F into a tubular structure 180F as discussed supra. The voids 230B can be registered in both the cross-machine direction and the machine direction. A laser cutting system may be controlled to create any desired void 230B position, size, and shape. The machine direction void 230B spacing and cross machine void spacing may also be controlled. Voids 230B can be generated in the sheet metal 120 to form relatively high aspect ratio rectangles with their minimum dimension generally parallel to the longitudinal axis 236 of the tubular structure 180F.

The voids 230B can be disposed within the sheet metal 120F so a first of the voids 230B disposed in a first convolution of the sheet metal 120F is overlaid by a second of the voids 230B disposed within an immediately succeeding convolution of the sheet metal 120F. Further, the machine direction spacing D₁, D₂ of the voids 230B can be increased for succeeding voids 230B so that a void 230B overlays a preceding void 230B when wound into the tubular structure 180F. The machine direction void spacing increase (i.e., D₁, D₂ ) can be proportional to the thickness of the first metal material 200 forming sheet metal 120 and may be pre-determined and programmed into the laser cutting system by means known in the art. The machine direction length L₁, L₂ of the voids 230B can be increased for succeeding voids 230B so that a void 230B overlays a preceding void 230B when wound into the tubular structure 180F. Additionally, the machine direction void length increase (i.e.,L₂>L₁) can be proportional to the thickness of the first metal material 200 forming sheet metal 120 and may be pre-determined and programmed into the laser cutting system by means known in the art. Further, voids 230B can be axially aligned and circumferentially aligned, thus creating continuous structural regions in the axial direction which provide a tubular structure 180F with a relatively high cross-sectional moment of inertia and correspondingly low axial deflection.

After the second region 215 of tubular structure 180F is formed with sheet metal 120F comprising the desired voids, the void generation system 240 is de-activated and the remainder of tubular structure 180 formed with the homogenous sheet metal 120 as discussed supra. The tubular structure 180F formed in this manner has substantially lower total mass with a relatively minor decrease in strength, modulus of elasticity, and internal vibration damping. This type of improved strength-to-weight tubular structure 180F may be especially useful in aeronautical and space applications.

### Z-Direction Out-of-Plane Deformation of the Sheet Metal

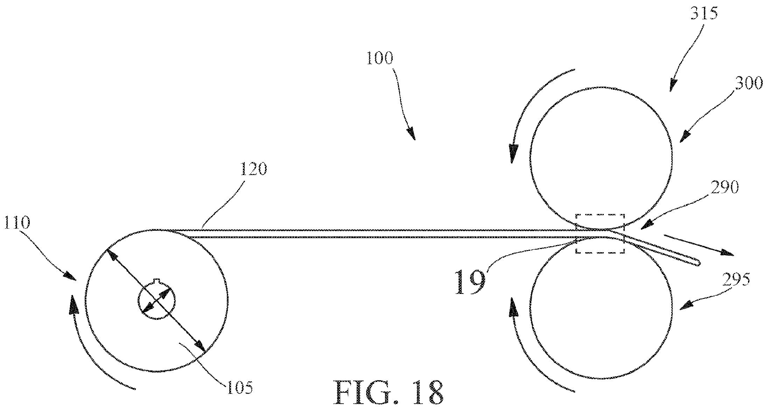

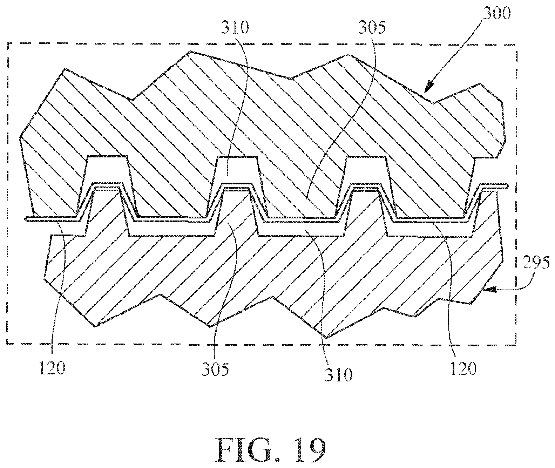

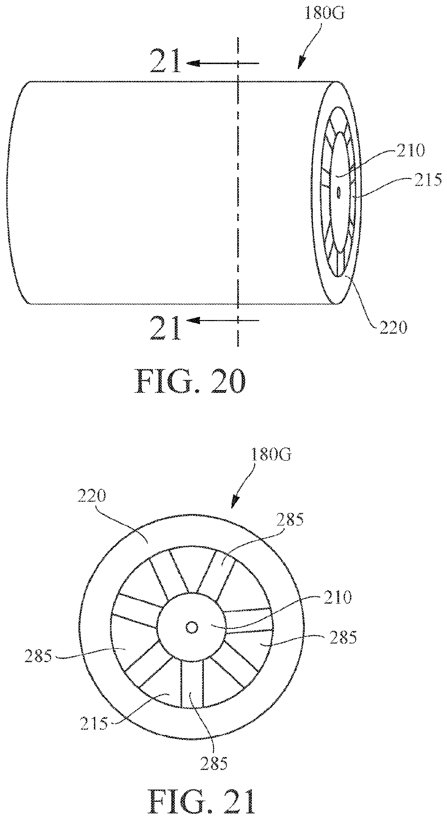

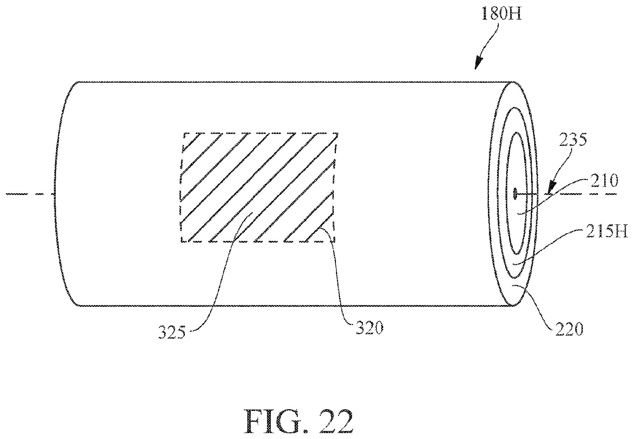

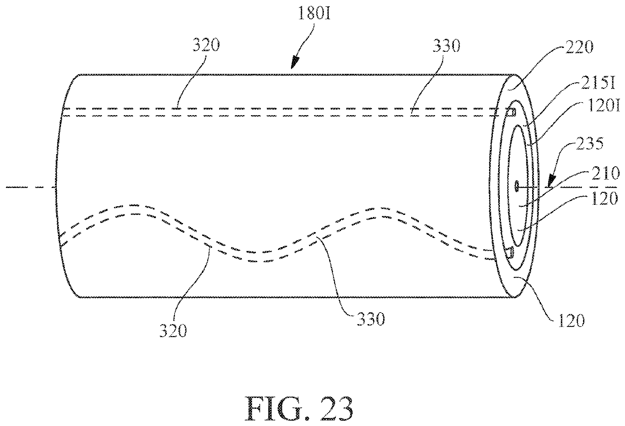

Referring to FIGS. 18-23, an alternative manufacturing process 100G for improved strength-to-weight tubular structures 180G uses out-of-plane deformation of the sheet metal 120 which is subsequently wound to form the tubular structure 180G. An out-of-plane deformed sheet metal 120 (e.g., a 'fluted' sheet metal 120) can create void volumes 285 between subsequent layers of sheet metal 120 within the convolutely wound tubular structure 180. These void volumes 285 can reduce mass without significant degradation of physical properties such as strength, modulus of elasticity, and internal vibration damping. In one embodiment, the out-of-plane, or z-direction, deformation is attained by passing the sheet metal 120 through a nip 290 formed by engaging a first pattern roll 295 with a second pattern roll 300. The entire width of the sheet metal 120 is subject to the deformation process.

The first 295 and second 300 pattern rolls have corresponding 3D patterns of protrusions 305 and recessions 310 engraved on the peripheral surfaces thereof. The pattern rolls 295, 300 are inter-engaged with each other to provide preferably a multiplicity of individual engaging configurations formed by the individual corresponding protrusions 305 and recessions 310 of the pattern rolls 295, 300 during the rotation thereof, wherein preferably each protrusion 305 of the engraved embossing pattern of one of the rolls 295, 300 at some portion of rotation becomes inter-engaged with a corresponding recession 310 of the opposite roll 300, 295 such as to form preferably a substantially non-contacting relationship between the inter-engaged corresponding protrusion 305 and recession 310. The non-contacting relationship includes a full engagement position, when the corresponding individual protrusion 305 and recession 310 of the inter-engaged pattern rolls 295, 300 become aligned with each other and with the opposing axes of rotation of the pattern rolls 295, 300 respectively. The full engagement position includes desired clearance(s), enough to accommodate the desired thickness of the sheet metal 120 to be deformed between the inter-engaged protrusions 305 and recessions 310 of the rotating pattern rolls 295, 300. The first pattern roll 295 has a first deformation pattern engraved on the peripheral surface thereof, comprising protrusions 305 and recessions 310. The second pattern roll 300 has a second deformation pattern engraved on the peripheral surface thereof, comprising recessions 310 and protrusions 305. The protrusions 305 of the first pattern roll 295 engage with the corresponding recessions 310 of the second pattern roll 300, and similarly, the recessions 310 of the first pattern roll 295 engage with the corresponding protrusions 305 of the second pattern roll 300.

Corresponding protrusions 305 and recessions 310 become inter-engaged with each other to form the full engagement position and a resulting deformation of the sheet metal 120 in accordance with this invention are preferably inter-engaged such that they are separated from each other by desired clearance(s) therebetween, such as sidewall clearances and radial clearances. For instance, a sidewall clearance can be formed between the sidewalls of the corresponding inter-engaged protrusions 305 and recessions 310. Further, a first radial clearance can be formed between the top surface of the protrusions 305 of the first pattern roll 295, defining an outermost peripheral surface of the first roll 295, and the bottom surface of the corresponding recessions 310 of the second pattern roll 300, defining an innermost peripheral surface of the second pattern roll 300. Similarly, a second radial clearance can be formed between the bottom surface of the recessions 310 of the first pattern roll 295, defining the innermost peripheral surface of the first pattern roll 295, and the top surface of the corresponding protrusions 305 of the second pattern roll 300, defining the outermost peripheral surface of the second pattern roll 300.

Any desired pattern may be engraved on the first pattern roll 295, with a correspondingly complementary pattern engraved on the second pattern roll 300. In one embodiment, the patterns are selected to provide the desired out-of-plane deformation. The selected patterns may optimize the z-direction deformation distance, the size and shape of individual deformations, the spacing of deformations from one another, and the total deformation area and the resulting void volume 285 area created in second region 215. Deformations may be made out-of-plane in one direction from the central plane of the sheet metal 120 or in both directions. The deformation size and spacing may be controlled to allow nesting of a first deformation with an overlying second deformation in the rewound tubular structure 180G, wherein the radial distance between the centroid plane of adjacent layers of sheet metal in a nested region is less than the radial distance between the centroid plane of adjacent layers of sheet metal in a non-nested region. The deformation size and spacing may also be selected to prevent nesting.

Engagement between the first pattern roll 295 and the second pattern roll 300 may be controlled by adjusting the relative position of the first pattern roll 295 bearing housings to the second pattern roll 300 bearing housings. In a non-limiting example, the first pattern roll 295 bearings are fixed to a frame. The second pattern roll 300 is mounted to a pivot in the frame. The longitudinal axis of the second pattern roll 300 is parallel to the longitudinal axis of the first pattern roll 295 and offset such that the outer surface of the first pattern roll 295 is separated by a relatively short distance from the outer surface of the second pattern roll 300. Linear actuators known in the art can be connected to each of the two second pattern roll 300 bearing housings and move the second pattern roll 300 about a pivot point to engage the second pattern roll 300 with the first pattern roll 295 until the desired depth of engagement is attained. The linear actuators can be independently controlled to ensure consistent depth of engagement at both ends of the pattern rolls 295, 300. Linear actuators can engage the pattern rolls 295, 300, to maintain the depth of engagement as the rolls 295, 300 rotate, and disengage the pattern rolls 295, 300 at any desired time.

In one embodiment, the second pattern roll 300 is engaged with the first pattern roll 295 so that the complementary patterns engage symmetrically. Lateral gaps between mating elements can be equal on both sides, as well as machine direction gaps. In a non-limiting example, adjustment screws may be used to reposition the bearing housings in a cross-machine direction relative to the frame and the first pattern roll 295 to equalize the lateral gaps between mating elements. A drive motor may be coupled to the first pattern roll 295. A first gear mounted to the first pattern roll 295 may engage and drive a second gear mounted to the second pattern roll 300 to maintain circumferential registration throughout the deformation process. Adjustment screws and circumferential slots in the second gear may be used to make circumferential adjustments and equalize machine direction gaps between mating elements.

By way of example, sheet metal 120 is unwound from a supply coil 105 and fed into the sheet metal deformation unit 315 operation. Initially, the pattern rolls 295, 300 are disengaged, and no deformation occurs. The sheet metal 120 passes between the disengaged pattern rolls 295, 300 and is fed into the recoiler 150 where it is convolutely wound to form the first inner region 210 of tubular structure 180G. The second pattern roll 300 is then engaged with the first pattern roll 295 until the desired depth of engagement is attained. The sheet metal 120 continues passing between the pattern rolls 295, 300, is deformed out-of-plane in the Z-direction and is subsequently wound into the second region 215 of tubular structure 180G. The pattern rolls 295, 300 can remain engaged long enough to deform a machine direction length of sheet metal 120 approximately equal to the perimeter of tubular structure 180G. The pattern rolls 295, 300 are then disengaged and remain disengaged until a machine direction length of sheet metal 120 has passed between the rolls 295, 300 corresponding to the new perimeter of the tubular structure 120. This process is repeated until the second region 215 of the tubular structure 180G has been completely formed. The resulting alternating layers of flat/deformed/flat sheet metal 120 can provide a strong structure while preventing nesting of overlying peaks and valleys in the deformed sheet metal 120 and maximizing the efficiency of the void volumes 285 to reduce the density of tubular structure 180G. After the second region 215 of tubular structure 180G is formed, the pattern rolls 295, 300 remain disengaged while undeformed sheet metal 120 passes between the pattern rolls 295, 300 and is subsequently wound into the third region 220 of tubular structure 180G until the desired wall thickness and outer dimensions are attained. The tubular structure 180G formed in this manner can have substantially lower total mass with a relatively minor decrease in strength, modulus of elasticity, and surface hardness . This type of improved strength-to-weight tubular structure 180G may also be useful in aeronautical and space applications. Couplings or end caps can be used on both ends of the tubular structures 180G to totally enclose the exposed void regions 285.

In certain applications, it may be advantageous to provide out-of-plane deformations to multiple (e.g., several) layers of sheet metal 120 simultaneously prior to winding. An additional exemplary embodiment could provide an un-deformed sheet metal 120 layer disposed between successive layers of out-of-plane deformed layer to prevent 'nesting' of successive deformations or protrusions in succeeding layers of the wound tubular structure 180. In one embodiment, successive layers of out-of-plane deformed layers are not bonded to each other but rather to an intermediate layer of un-deformed sheet metal 120 disposed therebetween.

### Adhesive Bonding of Layers

In one embodiment, adjacent layers of the convolutely wound sheet metal in the tubular structure 180 are adhesively bonded. The adhesive bonding provides the desired structural integrity for the convolutely wound tubular structure and is a key element in providing the desired deflection resistance and vibration damping in tubular structure 180. In one embodiment, the layers can be adhesively bonded 190 during the manufacturing process using a class of adhesives known as structural adhesives. These adhesives are typically based on epoxy, acrylic, urethane, or cyanoacrylate chemistries and are known in the art to provide very strong bonds between adjoining metal surfaces.

In one embodiment, adhesive is applied to the top side 121 of the sheet metal 120 after other processes such as splicing, void generation, and out-of-plane deformation are complete, and before the winding process. As shown in FIGS. 16-17, the top side 121 of sheet metal 120 subsequently contacts the mandrel 160 as sheet metal 120 is attached to mandrel 160 to begin the winding process. The opposite side of sheet metal 120 is the bottom face 122. The bottom face 122 of sheet metal 120 contacts adjustable pressure roll 170 during the winding process. Adhesive application processes known in the art are suitable for applying the liquid adhesive in this application. These fluid application processes include spray, extrusion through nozzles, extrusion through manual applicators, slot dies, gravure, offset gravure, flexographic, permeable rolls, jetting, and spray systems. In one non-limiting example, adhesive is extruded through a hand held applicator comprising multiple apertures and onto sheet metal 120. The applicator may be moved in the cross machine direction to apply a pattern of stripes. A notched putty knife may subsequently be used to spread the adhesive in the machine direction until the adhesive is distributed in a substantially uniform layer on the top surface 121 of sheet metal 120. In an alternate embodiment, the adhesive is applied in a desired pattern wherein the adhesive zones are in discrete areas of a desired size and shape and with a desired spacing in the cross machine direction and machine direction. In an alternate embodiment, the adhesive is applied to sheet metal 120 in any desired pattern of first zones comprising adhesive and second zones which do not comprise adhesive.

In another embodiment, a permeable roll is used to apply adhesive to sheet metal 120 just prior to sheet metal 120 being wound to form tubular structure 180. Adhesive is applied in a desired pattern (defined by the aperture pattern in the surface of the permeable roll) to the top face 121 of sheet metal 120 as sheet metal 120 travels in a near-horizontal plane just prior to entering recoiler 150C and the winding process. The application pattern may be optimized for the particular tubular structure 180 application. For example, adhesive can be applied in a continuous line at the transverse leading edge of the sheet metal 120, continuous lines along both edges of the sheet metal 120, and in discrete dots spaced apart in regular intervals in both the machine direction and cross machine direction. In an alternate embodiment, a permeable roll is used to apply adhesive to sheet metal 120 in a uniform coating. The permeable roll comprises a uniform pattern of apertures. The permeable roll surface speed is controlled to be a desired fraction of the speed of sheet metal 120. Controlling the speed mismatch to a desired fraction smears the adhesive sufficiently to apply a uniform coating of adhesive to the sheet metal 120. In one embodiment, the adhesive application system is controlled to apply adhesive in a desired thickness on the top surface 121 of sheet metal 120. The adhesive thickness may be controlled to be 0.003 inches to 0.030 inches (0.076-0.76 mm). In another embodiment, the adhesive thickness may be controlled to be 0.005 inches to 0.020 inches (0.127-0.508 mm). In another embodiment, the adhesive thickness may be controlled to be 0.007 inches to 0.013 inches (0.178-0.330 mm). In one embodiment, the adhesive thickness is controlled to the desired target +/-0.003 inches (0.076 mm) at all sheet metal 120 positions comprising adhesive. Various methods known to those skilled in the art may be used to control the adhesive thickness and adhesive thickness uniformity, including but not limited to, permeable roll aperture size and spacing, adhesive flow rate through the permeable roll, spacing between the permeable roll surface and the sheet metal 120, and the speed mismatch between the permeable roll surface and sheet metal 120. Controlling the adhesive to a desired thickness and uniformity of adhesive thickness is a key element in producing a convolutely wound tubular structure 180 with the desired deflection resistance and internal vibration damping.

Spacer beads known to those of skill in the art may also be dispersed within the adhesive prior to applying the adhesive to sheet metal 120. The spacer beads may be round and comprise a diameter approximately equal to the desired adhesive thickness, further improving the capability to apply adhesive to the sheet metal 120 at the desired thickness and uniformity of thickness.

Two-sided tape may be applied to the top surface 121 of sheet metal 120 along the cross machine leading edge 175 of sheet metal 120 prior to sheet metal 120 entering recoiler 150C. As shown in FIGS. 16 and 17, sheet metal 120 enters the recoiler 150C and is attached to winding mandrel 160 (which may become a component in the convolutely wound tubular structure) via compression between adjustable pressure roll 170 and winding mandrel 160. The adjustable pressure roll 170 contacts the bottom face 122 of sheet metal 120 and is thus not exposed to the two-sided tape. The two-sided tape adheres sheet metal 120 to the surface of mandrel 160. In one embodiment, a uniform thickness of adhesive covers substantially all of the top surface 121 of sheet metal 120 except for the area covered by the two sided tape. As mandrel 160 rotates, sheet metal 120 is guided around the longitudinal axis of mandrel 160 to form first layer 210 of tubular structure 180. The top surface 121 of sheet metal 120 faces toward the inside diameter of tubular structure 180 and the bottom surface 122 of sheet metal 120 faces toward the outer diameter of tubular structure 180. After approximately one revolution, the leading edge 175 of the bottom face 121 of sheet metal 120 is brought into contact with the top face 122 of sheet metal 120 entering the winding process and layer-to-layer bonding occurs. Continued rotation of mandrel 160 conveys additional sheet metal 120 into the winding process 100, with adhesive previously applied on the top face 121 of sheet metal 120 entering the winding process continuing to contact and bond with the bottom face 122 of sheet metal 120 previously wound into tubular structure 180 . This process continues until the tubular structure 180 desired wall thickness and desired outer dimensions are attained.

In one embodiment, the winding mandrel 160 is a component of the convolutely wound tubular structure. In one non-limiting example, the winding mandrel 160 may be a carbon fiber resin matrix tube. In one embodiment, the convolutely wound tubular structure comprises at least two convolutions of sheet metal 120 wherein adjacent layers of sheet metal 120 are bonded by adhesive. In another embodiment, the convolutely wound tubular structure comprises at least three convolutions of sheet metal 120 wherein adjacent layers of sheet metal 120 are bonded by adhesive. While the tubular structure is referred to as convolutely wound in such instances, one of ordinary skill in the art will appreciate that not all portions of the tubular structure (i.e., the mandrel 160 as the inner portion of the tubular structure 180) are convolutely wound.

In an alternative embodiment, winding mandrel 160 comprises an aluminum tube 165, aluminum wire 166, partial wrap sheet metal 125, and kraft paper 126. In this embodiment, the mandrel 160 is not used as a component in the convolutely wound tubular structure and will be removed from the convolutely wound tubular structure after the winding process is completed. A hollow aluminum tube 165 having a length slightly greater than the length of the desired convolutely wound tubular structure 180 is selected to form the inner core of mandrel 160. Aluminum wire 166 having a diameter of approximately 0.060 inches (1.524 mm) is helically wound in one layer around the aluminum tube 165 which may include the entire length of the aluminum tube 165. Both ends of aluminum wire 166 are secured in place to the outer surface of the aluminum tube 165 with tape. Partial wrap sheet metal 125 is prepared wherein the machine direction length of partial wrap sheet metal 125 is slightly less than the circumference defined by the outer surface of aluminum wire 166 helically wound around aluminum tube 165. The width of partial wrap sheet metal 125 is approximately equal to the width of sheet metal 120 to be convolutely wound about mandrel 160 to form tubular structure 180. Kraft paper 126 is prepared wherein the machine direction length of kraft paper 126 is approximately 2 inches (50.8 mm) longer than the machine direction length of partial wrap sheet metal 125 and the cross machine length of kraft paper 126 is substantially equal to the cross machine length of partial wrap sheet metal 125. Kraft paper 126 is placed over partial wrap sheet metal 125 and the machine direction edges of partial wrap sheet metal 125 and kraft paper 126 are aligned. A terminal edge portion of the kraft paper 126, approximately 1 inch (25.4 mm) of kraft paper 126 in one embodiment, is then folded over both cross machine edges of partial wrap sheet metal 125. Partial wrap sheet metal 125 with kraft paper 126 overlying partial wrap sheet metal 125 is then centered in the cross machine direction over aluminum tube 165 and wrapped circumferentially around aluminum wire 166 wherein kraft paper 126 forms the outer surface of mandrel 160. Since the machine direction length of partial wrap sheet metal 125 and overlying kraft paper 126 is less than the circumference of aluminum wire 166 disposed on aluminum tube 165, a slight gap is formed between the ends of partial wrap sheet metal 125 with overlying kraft paper 126. Partial wrap sheet metal 125 and kraft paper 126 are secured in place using tape extending from the outer face of kraft paper 126 on one side of the slight gap to the outer face of kraft paper 126 on the opposite side of the slight gap. In this embodiment, the mandrel 160 in various embodiments may be an aluminum tube 165, aluminum wire 166 helically wound around the aluminum tube 165, partial wrap sheet metal 125, and kraft paper 126. Prior to beginning the winding process using, two-sided tape is applied to the top surface 121 of sheet metal 120 along the cross machine leading edge 175 of sheet metal 120 prior to sheet metal 120 entering recoiler 150C.

As shown in FIGS. 16 and 17, one embodiment of the process to wind a convolutely wound tubular structure begins as sheet metal 120 enters the recoiler 150C and is attached to the winding mandrel 160 via compression between adjustable pressure roll 170 and winding mandrel 160. The adjustable pressure roll 170 contacts the bottom face 122 of sheet metal 120 and is thus not exposed to the two-sided tape. The two-sided tape adheres sheet metal 120 to the surface of mandrel 160. In one embodiment, a previously applied uniform thickness of adhesive covers substantially all of the top surface 121 of sheet metal 120 except for the area covered by the two sided tape and the portion of the top surface 121 of sheet metal 120 that subsequently forms the inner surface of the convolutely wound tubular structure. As mandrel 160 rotates, sheet metal 120 is guided around the longitudinal axis of mandrel 160 to form the first layer 210 of the tubular structure 180. After approximately one revolution, the leading edge 175 of the bottom face 121 of sheet metal 120 is brought into contact with the top face 122 of the sheet metal 120 entering the winding process and layer-to-layer bonding occurs. Continued rotation of the mandrel 160 conveys additional sheet metal 120 into the winding process 100, with adhesive previously applied on the top face 121 of sheet metal 120 entering the winding process continuing to contact and bond with the bottom face of the sheet metal 120 previously wound into tubular structure 180 . This process continues until the tubular structure 180 wall thickness and desired outer dimensions are attained. In one embodiment, the convolutely wound tubular structure 180 has at least two convolutions of sheet metal 120 wherein adjacent layers of sheet metal 120 are bonded by adhesive. In another embodiment, the convolutely wound tubular structure has at least three convolutions of sheet metal 120 wherein adjacent layers of sheet metal 120 are bonded by adhesive. After the winding process and adhesive curing is completed, aluminum wire 166 may be removed from the mandrel 160 assembly by pulling it out from one or both ends of the mandrel 160. The removal of the aluminum wire 166 provides a slight radial clearance sufficient for then removing the aluminum tube 165. Partial wrap sheet metal 125 is then slid out axially from one end of the mandrel 160. The remaining kraft paper 126 and the two-sided tape used to attach sheet metal 120 to mandrel 160 are then removed, starting from one end of the mandrel 160 and extending to the opposite end of mandrel 160. This embodiment of the mandrel 160 may be used to provide a convolutely wound tubular structure 180 wherein the mandrel 160 is not a component of the convolutely wound tubular structure 180. In one non-limiting example, the convolutely wound tubular structure 180 does not have an inner region of a single layer tube. In a second non-limiting example, a single layer tube which is or is not the mandrel 160 is subsequently inserted inside and adhesively bonded to the inner surface of the convolutely wound tubular structure 180.

In one embodiment, adjacent layers of sheet metal 120 within the convolutely wound tubular structure 180 are separated by a substantially uniform layer of adhesive comprising viscoelastic properties and the two-sided tape comprising viscoelastic properties along leading edge 175 of sheet metal 120, from the innermost layer of the convolutely wound tubular structure 180 to the outermost layer of the convolutely wound tubular structure 180. This continuous and substantially uniform convolutely wound separation layer comprising adhesive and/or two-sided tape has been found to provide a high level of internal vibration damping to the convolutely wound tubular structure. Structural adhesive applied in a uniform thickness of approximately 0.010 inches (0.254 mm) to the top side 121 of sheet metal 120 has been found to be particularly effective for improving the internal vibration damping of the tubular structure 180. Two-sided tape is also effective for improving the internal vibration damping of the tubular structure. In one embodiment, the structural adhesive and two-sided tape are both viscoelastic materials, known to those of skill in the art to improve vibration damping by converting mechanical energy into thermal energy. Configuring the structural adhesive and two-sided tape to separate adjacent layers of sheet metal 120 throughout the entirety of the convolutely wound tubular structure 180, at a substantially uniform separation thickness determined by the adhesive thickness and two-sided tape thickness, has been found to provide a unique combination of high deflection resistance and high internal vibration damping. This assembly technique prevents any contact between adjacent metal layers within the convolutely wound structure 180 and is a key element in providing improved internal vibration damping wherein the structural adhesive and two-sided tape comprise viscoelastic properties and are effective in converting mechanical vibration energy into thermal energy.

Once adhesive has been applied to the top surface 121 of sheet metal 120 entering the winding process, the winding tension and the force exerted by an adjustable pressure roll 170, which presses in a generally perpendicular direction to sheet metal 120 to compress sheet metal 120 against the winding tubular structure 180, provide enough pressure to effectively bond the layers of tubular structure 180 together during the winding process.

Maintaining consistent tension in sheet metal 120 during the winding process may help to attain the substantially uniform adhesive thickness within the layers of the convolutely wound tubular structure 180, wherein the substantially uniform adhesive thickness may provide improved vibration damping. To maintain the desired tension in sheet metal 120, the sheet metal 120 is conveyed through a nip formed between a metal roller and rubber covered roller wherein the longitudinal axes of the rollers are orthogonal to the machine direction of sheet metal 120. The nip pressure between the metal roller and the rubber covered roller is controlled to a level sufficient to prevent the sheet metal 120 slipping relative to the metal roller surface, even at the highest desired tension of sheet metal 120. The nip pressure may be controlled by linear actuators, air cylinders, springs, or any other suitable means known to one of skill in the art. A magnetic particle brake is coupled to the metal roller by means known to those of skill in the art. The DC current input to the magnetic particle brake may be controlled to provide a desired braking torque which provides the desired tension in sheet metal 120. Other known embodiments for controlling sheet tension may be used.

Maintaining consistent radial pressure on sheet metal 120 during the winding process is also desired to attain a uniform adhesive thickness within the layers of the convolutely wound tubular structure 180 since the adhesive has not yet cured during the winding process and may thus be distorted into a non-uniform thickness if the radial pressure is inconsistent. In one non-limiting example, a hybrid winding process is used to form a convolutely wound tubular structure 180. The loading force of adjustable pressure roll 170 is controlled by air cylinders, linear actuators, springs, or other desired means to a target force. The force is controlled to maintain the tubular structure 180 in the desired winding position and exert a desired radial force on sheet metal 120 to ensure a uniform thickness of adhesive disposed between adjacent layers of sheet metal 120 throughout the entirety of the winding process.

At least some of the adhesives used in the process require significant curing time. The curing time may range from several minutes up to 24 hours. For a relatively uniform thickness of the fully cured adhesive within the convolutely wound tubular structure 180, a uniform compression force may be applied to the surface of the convolutely wound structure during the entirety of the curing process. In one non-limiting example, kraft paper is attached to the trailing edge of sheet metal 120 prior to the winding process. The kraft paper may have a cross machine width approximately equal to the cross machine width of sheet metal 120. The kraft paper may have a length sufficient to wrap at least several layers around the convolutely wound tubular structure 180. The kraft paper tension may be controlled by the same means as described supra for sheet metal 120. The kraft paper tension may be controlled to be approximately equal to the sheet metal 120 tension during the winding process or it may be controlled to be different than the sheet metal 120 tension during the winding process. After the desired length of sheet metal 120 has been wound into the convolutely wound tubular structure 180, the winding process continues and at least several layers of kraft paper are wound over the previously wound layers of sheet metal 120. The kraft paper is then cut off in the cross machine direction and the trailing edge of the kraft paper is attached to the outer layer of previously wound kraft paper by tape or other suitable means. The kraft paper is kept in place, overwrapping the convolutely wound tubular structure 180, until the adhesive bonding adjacent layers of sheet metal 120 within the convolutely wound tubular structure 180 is fully cured. The layers of kraft paper tensioned at a desirable level while overlying the convolutely wound sheet metal 120 provide a uniform compressive force on the outer surface of the convolutely wound tubular structure 180, thereby improving the thickness uniformity of adhesive bonding adjacent layers of sheet metal 120. The kraft paper is then removed from the convolutely wound tubular structure 180 after the adhesive curing process is completed. Some adhesives may require curing at elevated temperatures. If these adhesives are selected, the finished tubular structure 180 may be placed inside an oven known to provide the required curing environment for a desired length of time.

Some adhesives also require two parts, with one fluid acting as a catalyst to activate the bonding in the other fluid. If these adhesives are used, a mixing nozzle may be used to mix the two adhesive parts prior to the adhesive flowing through the hand held applicator comprising multiple apertures described supra. In an alternative embodiment, a permeable roll is used to apply the adhesive. The two adhesive components may be routed in separate fluid circuits within the permeable roll and may exit the permeable roll in separate apertures. The apertures for a first adhesive component may be positioned slightly upstream in the machine direction of the apertures for a second adhesive component. The permeable roll may be rotated at a speed mismatch relative to sheet metal 120 as described supra. The speed mismatch may provide a smearing effect that effectively mixes the two adhesive components.

In one embodiment, the adhesive used to bond adjacent layers of convolutely wound sheet metal 120, or to bond the convolutely wound tubular structure 180 to a single layer outer tube, and/or to bond the convolutely wound tubular structure 180 to a single layer inner tube, or to bond a single layer inner tube to a single layer outer tube, is a viscoelastic material capable of converting mechanical vibration energy into thermal energy. The single layer inner and outer tubes may be solid and not convolutely wound members according to various embodiments of this invention. A suitable structural adhesive for use as discussed infra is Scotch-Weld^{™} Acrylic Adhesive DP8425NS , manufactured by 3M^{™} Industrial Adhesives and Tapes Division 3M Center, Building 225-3S-06 St. Paul, Minn. 55144-1000. Such an adhesive is a 24-hour cure, two-part acrylic structural adhesive that provides the requisite shear, peel, and impact performance. This product provides appropriate adhesion to many plastics and metals, including those with slightly oily surfaces. This product has a suitable fast rate of strength build, providing structural strength in minutes, and non-flammability. This adhesive further contains glass beads (0.010 inch diameter) to control bond line thickness and improve adhesive layer thickness uniformity. The adhesive has a viscosity about 85,000 cP, a density about 1.03 g/cm³, and an overlap shear ranging from about 550 psi to about 3,800 psi (dependent upon material type and failure mode). It has been found that a convolutely wound tubular structure 180 comprising the DP8425NS acrylic structural adhesive in a relatively uniform thickness of approximately 0.010 inches (0.254 mm) between adjacent layers of convolutely wound sheet metal 120 provides improved deflection resistance with vibration damping. Other adhesives may also provide desired deflection resistance and vibration damping, including but not limited to epoxy structural adhesives and urethane structural adhesives. In one embodiment, adhesives are selected wherein the adhesive functions as an effective viscoelastic material and provides significant improvements in the vibration damping of the convolutely wound tubular structure 180 by converting vibration mechanical energy into thermal energy.

### Tubular Structures with One or More Single Layer Components

The convolutely wound tubular structure described supra provides desired weight, deflection resistance, internal vibration damping, mounting surface strength, and cracks and other damage resistance. It has been found that weight, deflection resistance, internal vibration damping, mounting surface strength, and cracks and other damage resistance may be attained by bonding the convolutely wound tubular structure to the outer surface of an inner region single layer tube offering rigidity to the tubular structure. Suitable materials for the inner region single layer or rigid tube include, but are not limited to, aluminum, carbon steel, stainless steel, metal alloys, carbon fiber resin matrix, and fiber glass. In one embodiment, the inner region single layer tube has a relatively high modulus of elasticity, with a range of 9,000,000 psi to 30,000,000 psi. In one non-limiting example, the inner region single layer tube is carbon fiber resin matrix. A suitable carbon fiber resin matrix tube is Part #46654-HM, manufactured by Rock West Composites, 3392 West 8600 South, West Jordan, Utah 84088. The carbon fiber resin matrix tube utilizes fibers with a modulus of elasticity of 55,000,000 psi and a tensile strength of 640,000 psi. The carbon fiber resin matrix tube has a composite elastic modulus of elasticity of approximately 19,000,000 psi and is well suited for applications requiring high deflection resistance such as robot extension tubes.

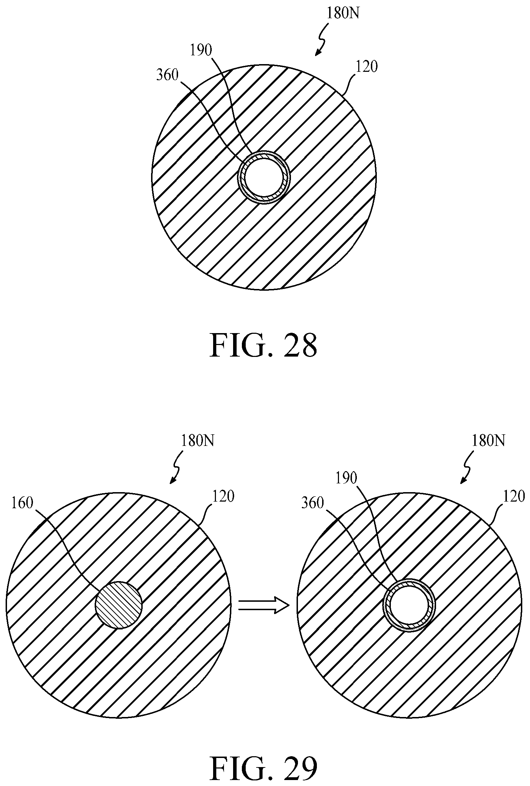

Referring to Fig. 28 and in one embodiment, the carbon fiber resin matrix tube 360 is used as the winding mandrel 160 and becomes a component of the convolutely wound tubular structure 180N. Sheet metal 120 is attached to the carbon fiber resin matrix tube 360 as described supra and convolutely wound over the carbon fiber resin matrix tube 360 until the tubular structure 180N wall thickness and desired outer dimensions are attained. In this embodiment, adhesive 190 applied in a relatively uniform thickness of approximately 0.010 inches (0.254 mm) to the surface of sheet metal 120 bonds the outer surface of the carbon fiber resin matrix tube 360 to the inner layer of sheet metal 120 used to form the desired tubular structure 180N. This layer of adhesive 190 bonding the carbon fiber resin matrix tube 360 to the inner layer of sheet metal 120, like the layers of adhesive bonding adjacent layers of sheet metal 120 in the convolutely wound tubular structure 180, provides improved deflection resistance and vibration damping.

Referring to Fig. 29 and in another embodiment, a tubular structure 180N is formed and the mandrel 160 is removed as described supra. A carbon fiber resin matrix tube is selected wherein the carbon fiber resin matrix tube has physical properties to provide desired deflection resistance and vibration damping. In one embodiment, the carbon fiber resin matrix tube has a modulus of elasticity of at least 9,000,000 psi and a wall thickness of 0.010 to 0.5 inches (0.254-12.7 mm). The carbon fiber resin matrix tube 360 outer diameter is selected to be slightly smaller than the inner diameter of the convolutely wound tubular structure 120. In one embodiment, the carbon fiber resin matrix outer diameter is selected to be 0.020 to 0.040 inches (0.51-1.02 mm) smaller than the inner diameter of the convolutely wound sheet metal 120. This provides a radial gap of 0.010 to 0.020 inches (0.254-0.51 mm) between the carbon fiber resin matrix outer tube surface and the inner surface of the convolutely wound sheet metal 120. This radial gap provides sufficient clearance to assemble the carbon fiber resin matrix tube 360 within the convolutely wound sheet metal 120 to form the tubular structure 180N over desired tube lengths of at least 72 inches (182.9 cm) and provides a near optimal adhesive thickness gap for peel strength and vibration damping. Adhesive 190 is applied to the outer surface of the carbon fiber resin matrix tube 360 and the carbon fiber resin matrix tube 360 is then inserted inside the convolutely wound sheet metal 120 to form the tubular structure 180N until at least one end of the carbon fiber resin matrix tube 360 is substantially aligned to one end of the convolutely wound tubular structure 180N. This embodiment provides the flexibility to use a desired carbon fiber resin matrix tube 360 as a component of the convolutely wound tubular structure 180N wherein the carbon fiber resin matrix tube 360 may be undesirable to use as a winding mandrel 160 due to wall thickness constraints or other limitations. In this embodiment, the process of inserting the carbon fiber resin matrix tube 360 inside the convolutely wound sheet metal 120 to form the tubular structure 180N provides self-centering radial alignment of the carbon fiber resin matrix tube 360, thus providing a relatively uniform adhesive thickness between the carbon fiber resin matrix tube 360 and the inner surface of the convolutely wound sheet metal 120. This layer of adhesive 190 bonds the carbon fiber resin matrix tube 360 to the inner surface of the convolutely wound sheet metal 120 to form the tubular structure 180N, like the layers of adhesive bonding adjacent layers of sheet metal 120, provides improved deflection resistance and desirable vibration damping to the tubular structure 180N.

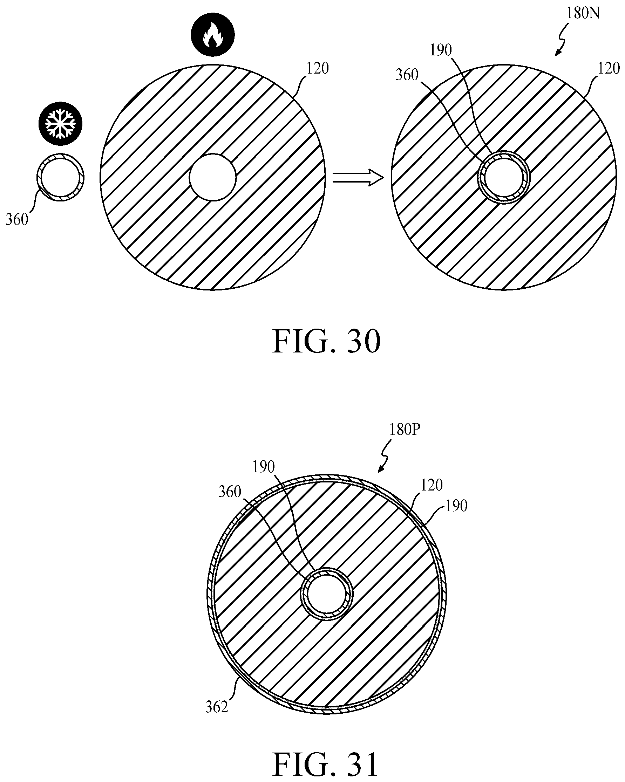

Referring to Fig. 30 and in an alternative embodiment, the convolutely wound tubular structure 180N may be assembled over the inner carbon fiber resin matrix tube 360 through a shrink fit process. In this embodiment, the inner diameter of the convolutely wound sheet metal 120 at ambient temperature may be approximately equal to or slightly less than the outer diameter of the carbon fiber resin matrix tube 360 at ambient temperature. In this method, the convolutely wound sheet metal 120 is heated to a temperature 150F to 200F degrees above ambient temperature, thereby increasing the inner diameter and outer diameter of the convolutely wound sheet metal 120. The carbon fiber resin matrix tube 360 may then be cooled to a temperature 50F to 100F below ambient temperature, thereby decreasing the inner diameter and outer diameter of the carbon fiber resin matrix tube 360. The radial clearance between the heated convolutely wound sheet metal 120 inner diameter and the cooled carbon fiber resin matrix tube 360 outer diameter is sufficient to assemble the carbon fiber resin matrix tube 360 inside the convolutely wound sheet metal 120 to form the tubular structure 180N. The convolutely wound sheet metal layer 120 and the carbon fiber resin matrix tube 360 are then controlled to return to ambient temperature. During the return to ambient temperature, the inner diameter of the convolutely wound sheet metal 120 decreases, the outer diameter of the carbon fiber resin matrix tube 360 increases, and a compression fit is attained between the convolutely wound sheet metal layer 120 and the carbon fiber resin matrix tube 360. In this compression fit, or shrink fit, state, there is sufficient compressive force and contact area between the convolutely wound sheet metal layer 120 and the carbon fiber resin matrix tube 360 to prevent relative axial, rotational and/or circumferential movement between them, even though no adhesive is used in the assembly process. While this is an effective assembly method, it has been found that the vibration damping of shrink fit tubular structures is inferior to adhesively bonded tubular structures since the viscoelastic damping properties of a desired adhesive are not provided within the shrink fit tubular structure 180.

The adhesive bonding at an interface of an inner region single layer tube 360 to the inside of the convolutely wound tubular structure 120 described supra provides significant improvements in weight, deflection resistance, internal vibration damping, mounting surface strength, and cracks and other damage resistance to the resulting tubular structure 180N. It has been found that weight, deflection resistance, internal vibration damping, mounting surface strength, and cracks and other damage resistance may be attained by adhesively bonding an outer region single layer tube 362 as shown in Fig. 31 over the combined convolutely wound sheet metal 120 and inner region single layer tube 360 described supra resulting in tubular structure 180P. Suitable materials for the outer region single layer 362 include, but are not limited to, aluminum, carbon steel, stainless steel, metal alloys, carbon fiber resin matrix, and fiber glass. In one embodiment, the outer region single layer 362 has a relatively high modulus of elasticity, with a range of 9,000,000 psi to 30,000,000 psi. In one embodiment, the outer region single layer 362 comprises a wall thickness of 0.015 inches to 0.5 inches (0.381-12.7 mm). In one non-limiting example, the outer region single layer 362 is aluminum and is not convolutely wound but is a solid tube of aluminum. The aluminum tube 362 is selected to comprise a wall thickness and physical properties to provide desired weight, deflection resistance, mounting surface strength, and resistance to cracks and other damage. The inner diameter of the outer region aluminum layer 362 is selected to be slightly larger than the outer diameter of the convolutely wound sheet metal 120. In one embodiment, the outer region aluminum tube 190 inner diameter is selected to be 0.020 to 0.040 inches (0.51-1.02 mm) larger than the outer diameter of the convolutely wound sheet metal layer 120. This provides a radial gap of 0.010 to 0.020 inches (0.254-0.51 mm) between the outer surface of the convolutely wound sheet metal layer 120 and the inner surface of the outer region aluminum tube 362. This radial gap provides sufficient clearance to assemble the convolutely wound tubular structure 180N inside the outer region aluminum tube 362 over desired tube lengths of at least 72 inches (182.9 cm) and provides a near optimal adhesive thickness layer 190 for peel strength and vibration damping to form a triple layer tubular structure 180P. Adhesive 190 is applied to the outer surface of the convolutely wound sheet metal 120 which is then inserted inside the outer region aluminum tube 362 until at least one end of the convolutely wound tubular structure 180N is substantially aligned to one end of the outer region aluminum tube 362. In this embodiment, the process of inserting the convolutely wound tubular structure 180N inside the outer region aluminum tube 362 provides radial self-centering alignment of the convolutely wound tubular structure 180P, thereby providing a relatively uniform adhesive thickness between the convolutely wound tubular structure 180N and the inner surface of the outer region aluminum tube 362. This layer of adhesive 190 bonding the convolutely wound tubular structure 180N to the inner surface of the outer region aluminum tube 362, like the layers of adhesive bonding adjacent layers of sheet metal 120 in the convolutely wound layer 120, provides improved deflection resistance and desirable vibration damping, wherein the viscoelastic properties of the adhesive effectively convert vibration mechanical energy into thermal energy for the resulting tubular structure 180P.

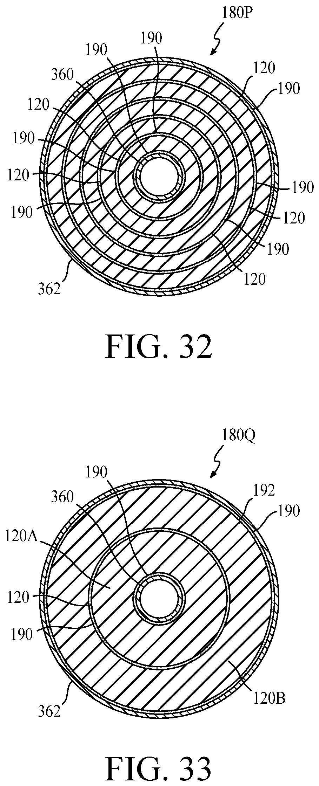

The embodiments discussed supra provide up to three regions of adhesive bonding. The first region of adhesive bonds adjacent layers of sheet metal 120 within the convolutely wound tubular structure 180. The second region of adhesive bonds the inner region single layer tube to the convolutely wound layers of sheet metal 120. The third region of adhesive bonds the convolutely wound sheet metal 120 to the outer region single layer tube. All three regions of adhesive provide significant improvement in vibration damping within the convolutely wound tubular structure 180, wherein the adhesive comprises viscoelastic properties and effectively converts vibration mechanical energy into thermal energy . In a non-limiting example as shown in Fig. 32, a convolutely wound tubular structure 180P may have five layers of convolutely wound sheet metal 120, an inner region single layer tube 360, and an outer region single layer tube 362. The convolutely wound sheet metal layer 120 may have four layers of adhesive between the five layers of sheet metal, plus one layer of adhesive 190 between the inner region single layer tube 360 and the convolutely wound sheet metal 120, plus one layer of adhesive 190 between the convolutely wound sheet metal layer 120 and the outer region single layer tube 362. The total may be six layers of adhesive 190 in various embodiments of this invention. The thickness of all adhesive layers is controlled to a desired range of 0.005 inches to 0.020 inches (0.127-0.508 mm). It has been found that this unique tubular structure 180P, having multiple layers of bonding adhesive 190 at a desired thickness, and at a desired relative thickness to the thickness of adjacent rigid materials 360, 362, wherein each adhesive layer 190 is disposed between high modulus of elasticity materials, provides substantial improvements in vibration damping. This phenomenon for improving vibration damping, known as shear damping, or constrained layer damping, may occur when constraining layers of relatively rigid materials force a viscoelastic material disposed between the rigid or single layer materials to deform in shear. The shear deformation of the viscoelastic material causes mechanical energy, such as that imparted by an external source to cause vibration of a tubular structure, to be converted into thermal energy. This energy transformation reduces the mechanical energy and its associated vibration amplitude of the tubular structure. In embodiments described infra, the single layer materials may be re-coilable sheet metal 120, re-coilable non-metal material, inner region single layer tubes, and outer region single layer tubes. In embodiments described infra, the viscoelastic material comprises adhesive.

Several embodiments of convolutely wound tubular structures 180 described supra provide substantial improvements in tubular structure vibration damping. In one embodiment as shown in Fig. 33, a convolutely wound structure 180Q comprises at least two convolutions of a first material 120A and a second material 120B. The first material 120A may be a re-coilable sheet metal or a re-coilable non-metal material. The second material 120B may be a bonding adhesive. It has been found that substantial improvements in vibration damping of the convolutely wound tubular structure 180Q may be attained when the ratio of the first material 120A thickness within the convolutely wound tubular structure 180Q to the second material 120B thickness within the convolutely wound tubular structure 180Q is 0.2 to 2.0. It has also been found that substantial improvements in vibration damping of the convolutely wound tubular structure 180Q may be attained when the ratio of the first material 120A density to the second material 120B density is 1.0 to 10.0. It has also been found that substantial improvements in vibration damping of the convolutely wound tubular structure 180Q may be attained when the ratio of the first material 120A modulus of elasticity to the second material 120B modulus of elasticity is 10.0 to 300.0.

Several embodiments of convolutely wound tubular structures 180Q adhesively bonded to a single layer outer tube 362 or additional region described supra provide substantial improvements in tubular structure vibration damping. In one embodiment, the convolutely wound structure 180Q may comprise at least 2 convolutions of a first material 120A and a second material 120B and is adhesively bonded inside a single layer outer tube 362. The first material 120A may be a re-coilable sheet metal or a re-coilable non-metal material. The second material 120B may be a bonding adhesive. In one embodiment, the single layer outer tube 362 may be a homogenous metal that is adhesively bonded to the outer surface of the convolutely wound layer 120B. It has been found that substantial improvements in vibration damping of the convolutely wound tubular structure 180Q may be attained when the ratio of the wall thickness of the single layer outer tube 362 to the thickness of the adhesive 190 bonding the single layer outer tube 362 to the convolutely wound layer 120B is 2.0 to 15.0. It has also been found that substantial improvements in vibration damping of the convolutely wound tubular structure 180Q may be attained when the ratio of the density of the single layer outer tube 362 to the density of the adhesive 190 bonding the single layer outer tube 362 to the convolutely wound tubular structure 180Q is 1.0 to 10.0. It has also been found that substantial improvements in vibration damping of the convolutely wound tubular structure 180Q may be attained when the ratio of the modulus of elasticity of the single layer outer tube 362 to the modulus of elasticity of the adhesive 190 bonding the single layer outer tube 362 to the convolutely wound tubular structure 180Q is 50.0 to 300.0.

Several embodiments of convolutely wound tubular structures 180 adhesively bonded to a single layer inner tube 360 or additional region(s) described supra provide substantial improvements in tubular structure 180 vibration damping. In one embodiment, the convolutely wound structure 180 may have at least two convolutions of a first material 120A and a second material 120B and is adhesively bonded to a single layer inner tube 360. The first material 120A may be a re-coilable sheet metal or a re-coilable non-metal material. The second material may be a bonding adhesive 190. In one embodiment, the single layer inner tube 360 may be a homogenous metal that is adhesively bonded to the inner surface of the convolutely wound tubular structure 180Q. In a second embodiment, the single layer inner tube 360 may be a carbon fiber resin matrix tube that is adhesively bonded to the inner surface of the convolutely wound tubular structure 180Q. It has been found that substantial improvements in vibration damping of the convolutely wound tubular structure 180 may be attained when the ratio of the wall thickness of the single layer inner tube 360 to the thickness of the adhesive 190 bonding the single layer inner tube 360 to the convolutely wound tubular structure 180Q is 2.0 to 100.0. It has also been found that substantial improvements in vibration damping of the convolutely wound tubular structure may be attained when the ratio of the density of the single layer inner tube 360 to the density of the adhesive 190 bonding the single layer inner tube 360 to the convolutely wound tubular structure 180Q is 1.0 to 10.0. It has also been found that substantial improvements in vibration damping of the convolutely wound tubular structure 180Q may be attained when the ratio of the modulus of elasticity of the single layer inner tube 360 to the modulus of elasticity of the adhesive 190 bonding the single layer inner tube 360 to the convolutely wound tubular structure 180Q is 50.0 to 500.0.

In one embodiment, a convolutely wound structure 180 comprising at least two convolutions of a first material 120A and a second material 120B is adhesively bonded to a single layer inner tube 360 or additional region and is adhesively bonded to a single layer additional region. The first material may be a re-coilable sheet metal or a re-coilable non-metal material. The second material may be a bonding adhesive. In one embodiment, the single layer inner tube may be carbon fiber resin matrix that is adhesively bonded to the convolutely wound tubular structure and the single layer outer tube may be aluminum that is also adhesively bonded to the convolutely wound tubular structure. In a second embodiment, the single layer inner tube may be aluminum that is adhesively bonded to the convolutely wound tubular structure and the single layer outer tube may be aluminum that is also adhesively bonded to the convolutely wound tubular structure. It has been found that substantial improvements in vibration damping of the convolutely wound tubular structure may be attained when the ratio of the wall thickness of the single layer inner tube to the thickness of the adhesive bonding the single layer inner tube to the convolutely wound tubular structure is 3.0 to 30.0 and when the ratio of the wall thickness of the single layer outer tube to the thickness of the adhesive bonding the single layer outer tube to the convolutely wound tubular structure is 3.0 to 30.0. It has also been found that substantial improvements in vibration damping of the convolutely wound tubular structure may be attained when the ratio of the density of the single layer inner tube to the density of the adhesive bonding the single layer inner tube to the convolutely wound tubular structure is 1.0 to 10.0 and when the ratio of the density of the single layer outer tube to the density of the adhesive bonding the single layer outer tube to the convolutely wound tubular structure is 1.0 to 10.0. It has also been found that substantial improvements in vibration damping of the convolutely wound tubular structure may be attained when the ratio of the modulus of elasticity of the single layer inner tube to the modulus of elasticity of the adhesive bonding the single layer inner tube to the convolutely wound tubular structure is 50.0 to 5,000 and when the ratio of the modulus of elasticity of the single layer outer tube to the modulus of elasticity of the adhesive bonding the single layer outer tube to the convolutely wound tubular structure is 50.0 to 5,000.

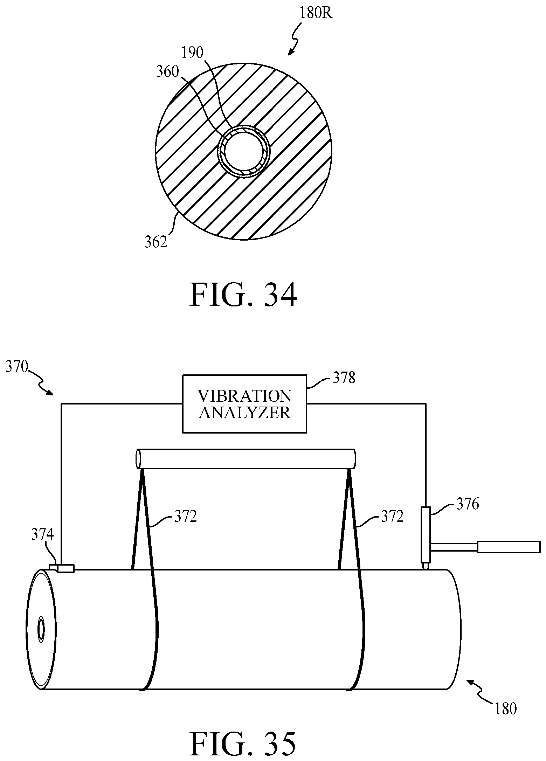

In an alternative embodiment as shown in Fig. 34, an inner region single layer tube 360 may be adhesively bonded inside an outer region single layer tube 362 without convolutely wound sheet metal between the outer region single layer tube 362 and the inner region single layer tube 360. Suitable materials for the inner region single layer tube 360 include, but are not limited to, aluminum, carbon steel, stainless steel, metal alloys, carbon fiber resin matrix, and fiber glass. In one embodiment, the inner region single layer tube 360 has a relatively high modulus of elasticity, with a range of 9,000,000 psi to 30,000,000 psi. In one non-limiting example, the inner region single layer tube 360 is carbon fiber resin matrix. The carbon fiber resin matrix tube 360 is selected to have a wall thickness and physical properties to provide desired weight and deflection resistance. Suitable materials for the outer region single layer tube 362 include, but are not limited to, aluminum, carbon steel, stainless steel, metal alloys, carbon fiber resin matrix, and fiber glass. In one embodiment, the outer region single layer tube 362 has a relatively high modulus of elasticity, with a range of 9,000,000 psi to 30,000,000 psi. In one non-limiting example, the outer region single layer tube 362 is aluminum. The aluminum tube 362 is selected to have a wall thickness and physical properties to provide desired weight, deflection resistance, mounting surface strength, and cracks and other damage resistance. The outer region single layer aluminum tube 362 inner diameter is selected to be slightly larger than the outer diameter of the carbon fiber resin matrix inner region single layer tube 360. In one embodiment, the outer region aluminum tube 362 inner diameter is selected to be 0.020 to 0.040 inches (0.51-1.02 mm) larger than the outer diameter of the carbon fiber resin matrix inner region single layer tube 360. This provides a radial gap of 0.010 to 0.020 inches (0.254-0.51 mm) between the outer surface of the carbon fiber resin matrix inner region single layer tube and the inner surface of the aluminum outer region single layer tube. This radial gap provides sufficient clearance to assemble the carbon fiber resin matrix inner region single layer tube inside the aluminum outer region single layer tube over desired tube lengths of at least 72 inches (182.9 cm) and provides a near optimal adhesive 190 thickness gap for peel strength and vibration damping. Adhesive 190 comprising viscoelastic properties is applied to the outer surface of the carbon fiber resin matrix inner region single layer tube 360 and the carbon fiber resin matrix inner region single layer tube 360 is then inserted inside the aluminum outer region single layer tube 362 until at least one end of the carbon fiber resin matrix inner region single layer tube 360 is substantially aligned to one end of the aluminum outer region single layer tube 362. In this embodiment, the process of inserting the carbon fiber resin matrix inner region single layer tube 360 comprising adhesive 190 on the outer surface of the carbon fiber resin matrix inner region single layer tube 360 inside the aluminum outer region single layer tube 362 provides radial self-centering alignment of the carbon fiber resin matrix inner region single layer tube 360, thereby providing a relatively uniform adhesive 190 thickness between the carbon fiber resin matrix inner region single layer tube 360 and the inner surface of the aluminum outer region single layer tube 362. This layer of adhesive 190 bonding the carbon fiber resin matrix inner region single layer tube 360 to the inner surface of the aluminum outer region single layer tube 362, like the layers of adhesive bonding adjacent layers of sheet metal 120 in the convolutely wound tubular structure 180, provides improved deflection resistance and desirable vibration damping in the tubular structure, wherein the adhesive comprises viscoelastic properties and is effective at converting vibration mechanical energy into thermal energy. It has been found that substantial improvements in vibration damping of the tubular structure may be attained when the ratio of the wall thickness of the inner region single layer tube 360 to the wall thickness of the outer region single layer tube 362 is 0.1 to 15.0. It has also been found that substantial improvements in vibration damping of the tubular structure 180R may be attained when the ratio of the thickness of the adhesive layer 190 bonding the inner region single layer tube 360 to the outer region single layer tube 362 to the wall thickness of the outer region single layer tube 362 is 0.01 to 1.0. It has also been found that substantial improvements in vibration damping of the tubular structure 180R may be attained when the ratio of the thickness of the adhesive layer 190 bonding the inner region single layer tube 360 to the outer region single layer tube 362 to the wall thickness of the inner region single layer tube 360 is 0.01 to 1.0. It has also been found that substantial improvements in vibration damping of the tubular structure 180R may be attained when the ratio of the density of the outer region single layer tube 362 to the density of the adhesive 190 bonding the outer region single layer tube 362 to the inner region single layer tube 360 is 1.0 to 10.0. It has also been found that substantial improvements in vibration damping of the tubular structure 180R may be attained when the ratio of the density of the inner region single layer tube 360 to the density of the adhesive 190 bonding the outer region single layer tube 362 to the inner region single layer tube 360 is 1.0 to 10.0. It has also been found that substantial improvements in vibration damping of the tubular structure 180R may be attained when the ratio of the modulus of elasticity of the outer region single layer tube 362 to the modulus of elasticity of the adhesive 190 bonding the outer region single layer tube 362 to the inner region single layer tube 360 is 50.0 to 300.0. It has also been found that substantial improvements in vibration damping of the tubular structure 180R may be attained when the ratio of the modulus of elasticity of the inner region single layer tube 360 to the modulus of elasticity of the adhesive 190 bonding the outer region single layer tube 362 to the inner region single layer tube 360 is 50.0 to 300.0.

Several methods 370 are known for measuring the level of vibration damping within a structure. Generally, the methods use accelerometers to measure reduction in vibration amplitude over a desired frequency range after a damping solution is implemented. As shown in Fig. 35 to evaluate the damping of convolutely wound tubular structures 180 used as robot tube extensions, the convolutely wound tubular structures 180 were suspended in a free-free state to make the first rigid body mode of the system as low as possible. The convolutely wound tubular structures 180 were suspended by two bungee cords 372, 372 wherein each bungee cord was located 22% of the tube length away from each end of the tube. These positions were used to ensure the tubes 180 were supported at the nodes of its first mode of vibration, thereby minimizing the effect of the supports on the vibration test results. A first accelerometer 374 was adhesively bonded to the outer surface of the tube 180 near one end of the tube. A suitable first accelerometer is Model 353B15, available from The Modal Shop, 10310 Aerohub Blvd., Cincinnati, Ohio, 45215. An excitation force was then imparted to each tube using an impulse hammer with a built-in second accelerometer 376. A suitable impulse hammer is Model 086C03, available from The Modal Shop, 10310 Aerohub Blvd., Cincinnati, Ohio, 45215. Feedback from the first and second accelerometers 374, 376 was then input to a vibration analyzer 378 and used to generate a Frequency Response Function as known to those of skill in the art. A suitable vibration analyzer 378 is Model DP901-930A, available from The Modal Shop, 10310 Aerohub Blvd., Cincinnati, Ohio, 45215. Analysis of the Frequency Response Function was used to determine the damping ratio for each vibration mode, the natural frequency, and the 1% ringdown time of each convolutely wound tubular structure 180. The 1% ringdown time is a parameter known to those of skill in the art which characterizes the time it takes the excitation response amplitude to dissipate to 1% of the original maximum amplitude. For homogenous materials, the 1% ringdown time is a physical material property that is consistent for all forms of the material. For example, the 1% ringdown time for aluminum is 11 seconds, whether the aluminum is in the form of convolutely wound sheet metal or in the form of a single layer outer tube or in the form of a solid cube. It has been found that the 1% ringdown time parameter is particularly effective for predicting the performance of robot tube extensions used in applications wherein rapid acceleration and deceleration of a substantial mass at a significant distance from a robot wrist creates undesirable positional errors. In many such applications, cycle rate is very important and the time for excitation amplitudes to dissipate to very low levels can determine maximum cycle rate and positioning accuracy at the end of a robot tube extension.

Convolutely wound tubular structures 180 of this instant invention and homogenous metal hollow tubes with comparable dimensions were measured to determine their vibration damping characteristics as discussed supra. Hollow aluminum tubes, which are the most common current industry standard for robot tube extensions, were found to have a 1% ringdown time of 11 seconds. Hollow steel tubes, also used as robot tube extensions in some applications, were found to have a 1% ringdown time of 10 seconds. These relatively long 1% ringdown times are a significant rate and positioning accuracy constraint in many industrial applications, especially those in high speed automation areas where the cycle rate target may be 20 to 30 cycles per minute, or one cycle every 2 to 3 seconds. The relatively long 1% ringdown time of 11 seconds for industry standard aluminum tubes far exceeds the time available in each production cycle to move from one position to another, accurately locate a mass at the end of a robot tube extension, and return to the starting point to repeat the cycle. Operating with aluminum tubes and the corresponding long 1% ringdown time of 11 seconds in such applications leads to significant position errors, causing corresponding poor quality, production downtime, rework, and unsafe operating conditions. Convolutely wound tubular structures 180 according to various embodiments of this invention having sheet metal 120 and adhesive as described supra, with comparable size dimensions to the hollow aluminum tubes, were found to have much faster 1% ringdown times, ranging from 0.5 to 4 seconds. This 63% to 95% reduction in 1% ringdown time clearly illustrates the vibration damping benefit of several layers of adhesive comprising viscoelastic properties within the tubular structure, especially when combined with desirable relative thicknesses of materials and desirable relative modulus of elasticity of materials as described supra. The vibration damping of the adhesively bonded tubular structure is much greater than the vibration damping of the tubular structure's constituent convolutely wound sheet metal. Adhesively bonded convolutely wound tubular structures 180 having a similar size and of sheet metal, adhesive, and a single layer outer tube were found to have even faster 1% ringdown times, ranging from 0.4 to 1.3 seconds. This 88% to 96% reduction in 1% ringdown time clearly illustrates the vibration damping benefit of several layers of adhesive comprising viscoelastic properties within the tubular structure, especially when combined with the relative thicknesses of materials and the relative modulus of elasticity of materials as described supra. The vibration damping of the adhesively bonded tubular structure is much greater than the vibration damping of the tubular structure's constituent convolutely wound sheet metal and is much greater than the vibration damping of the outer region single layer tube material. Similar size adhesively bonded convolutely wound tubular structures 180 having sheet metal, adhesive, a single layer outer tube, and a single layer inner tube were found to have even faster 1% ringdown times, ranging from 0.18 to 1.3 seconds. This 88% to 98% reduction in 1% ringdown time clearly illustrates the vibration damping benefit of several layers of adhesive with viscoelastic properties within the adhesively bonded tubular structure, especially when combined with the relative thicknesses of materials and the relative modulus of elasticity of materials as described supra. The vibration damping of the adhesively bonded tubular structure is much greater than the vibration damping of the tubular structure's constituent materials, including the convolutely wound sheet metal, the outer single layer tube material, and the inner single layer tube material. Producing convolutely wound tubular structures comprising multiple alternating layers of high modulus materials and adhesive, wherein both the high modulus materials and the adhesive have a desired thickness and thickness ratio as described supra, and wherein the adhesive has desirable viscoelastic vibration damping characteristics, clearly provides substantially improved vibration damping of tubular structures 180, as illustrated by the 1% ringdown results.

In one embodiment, a convolutely wound tubular structure 180 according to various embodiments of this invention having adhesive bonding of convolutely wound sheet metal 120 has a 1% ringdown time that is at least 10% less than the 1% ringdown time of the convolutely wound sheet metal material. In another embodiment, a convolutely wound tubular structure with adhesive bonding of convolutely wound sheet metal produces a 1% ringdown time that is at least 20% less than the 1% ringdown time of the constituent convolutely wound sheet metal material. In another embodiment, a convolutely wound tubular structure with adhesive bonding of convolutely wound sheet metal comprises a 1% ringdown time that is at least 30% less than the 1% ringdown time of the constituent convolutely wound sheet metal material.

In an alternative embodiment, a convolutely wound tubular structure adhesively bonded to a single layer outer tube has a 1% ringdown time that is at least 10% less than the 1% ringdown time of the single layer outer tube material. In another embodiment, a convolutely wound tubular structure adhesively bonded to a single layer outer tube has a 1% ringdown time that is at least 20% less than the 1% ringdown time of the single layer outer tube material. In another embodiment, a convolutely wound tubular structure adhesively bonded to a single layer outer tube offers a 1% ringdown time that is at least 30% less than the 1% ringdown time of the single layer outer tube material.

In another alternative embodiment, a convolutely wound tubular structure adhesively bonded to a single layer inner tube has a 1% ringdown time that is at least 10% less than the 1% ringdown time of the single layer inner tube material. In another embodiment, a convolutely wound tubular structure adhesively bonded to a single layer inner tube comprises a 1% ringdown time that is at least 20% less than the 1% ringdown time of the single layer inner tube material. In another embodiment, a convolutely wound tubular structure adhesively bonded to a single layer inner tube comprises a 1% ringdown time that is at least 30% less than the 1% ringdown time of the single layer inner tube material.

In yet another alternative embodiment, a convolutely wound tubular structure adhesively bonded to a single layer inner tube and adhesively bonded to a single layer outer tube comprises a 1% ringdown time that is at least 10% less than the 1% ringdown time of the single layer inner tube material or is at least 10% less than the 1% ringdown time of the single layer outer tube material. In another embodiment, a convolutely wound tubular structure adhesively bonded to a single layer inner tube and adhesively bonded to a single layer outer tube comprises a 1% ringdown time that is at least 20% less than the 1% ringdown time of the single layer inner tube material or is at least 20% less than the 1% ringdown time of the single layer outer tube material. In another embodiment, a convolutely wound tubular structure adhesively bonded to a single layer inner tube and adhesively bonded to a single layer outer tube comprises a 1% ringdown time that is at least 30% less than the 1% ringdown time of the single layer inner tube material or is at least 30% less than the 1% ringdown time of the single layer outer tube material.

In yet another alternative embodiment, a single layer inner tube is adhesively bonded inside a single layer outer tube. In this embodiment, there is only one layer of adhesive comprising viscoelastic properties within the tubular structure. This single layer of adhesive provides significant improvement in the vibration damping of the tubular structure. In one embodiment, the tubular structure comprises a 1% ringdown time that is at least 5% less than the 1% ringdown time of the single layer inner tube material or is at least 5% less than the 1% ringdown time of the single layer outer tube material. In another embodiment, the tubular structure comprises a 1% ringdown time that is at least 10% less than the 1% ringdown time of the single layer inner tube material or is at least 10% less than the 1% ringdown time of the single layer outer tube material. In another embodiment, the tubular structure comprises a 1% ringdown time that is at least 15% less than the 1% ringdown time of the single layer inner tube material or is at least 15% less than the 1% ringdown time of the single layer outer tube material.

Convolutely wound tubular structures 180 comprising sheet metal and adhesive as described supra provide substantial improvements in vibration damping, are lightweight, and provide desirable deflection resistance, strong mounting surfaces, and resistance to cracks and other damage. Bonding a single layer outer tube and/or a single layer inner tube to the convolutely wound tubular structures comprising sheet metal and adhesive as described supra provides even greater improvements in vibration damping, is lightweight, and provides even more desirable deflection resistance, strong mounting surfaces, and resistance to cracks and other damage. Bonding both a single layer outer tube and a single layer inner tube to the convolutely wound tubular structures comprising sheet metal and adhesive as described supra provides the most improvements in vibration damping, due at least partially to the multiple layers of adhesive within the tubular structure, while providing a lightweight structure, and provides the most desirable deflection resistance, strong mounting surfaces, and resistance to cracks and other damage.

In a first non-limiting example, a convolutely wound tubular structure 180 is provided with improved internal vibration damping, wherein the convolutely wound tubular structure comprises at least two convolutions of a first material and a second material, wherein the first material is aluminum sheet metal comprising a 1% ringdown time of 11.0 seconds and the second material is a bonding adhesive comprising viscoelastic properties. The convolutely wound tubular structure is adhesively bonded to an aluminum single layer outer tube comprising a 1% ringdown time of 11.0 seconds. The convolutely wound tubular structure is also adhesively bonded to an aluminum single layer inner tube comprising a 1% ringdown time of 11.0 seconds. The thickness ratios of the convolutely wound aluminum sheet metal to bonding adhesive, aluminum single layer outer tube to bonding adhesive, and aluminum single layer inner tube to bonding adhesive are controlled to desirable levels as described supra. The density ratios of the convolutely wound aluminum sheet metal to bonding adhesive, aluminum single layer outer tube to bonding adhesive, and aluminum single layer inner tube to bonding adhesive are also controlled to desirable levels as described supra. The modulus of elasticity ratios of the convolutely wound aluminum sheet metal to bonding adhesive, aluminum single layer outer tube to bonding adhesive, and aluminum single layer inner tube to bonding adhesive are also controlled to desirable levels as described supra. In one embodiment, the convolutely wound tubular structure comprises a 1% ringdown time approximately equal to 9.5 seconds, which is 13.6% less than the 11.0 second 1% ringdown time of the convolutely wound aluminum sheet metal and is 13.6% less than the 11.0 second 1% ringdown time of the aluminum outer tube and is 13.6% less than the 11.0 second 1% ringdown time of the aluminum inner tube. In another embodiment, the convolutely wound tubular structure comprises a 1% ringdown time approximately equal to 8.5 seconds, which is 22.7% less than the 11.0 second 1% ringdown time of the convolutely wound aluminum sheet metal and is 22.7% less than the 11.0 second 1% ringdown time of the aluminum outer tube and is 22.7% less than the 11.0 second 1% ringdown time of the aluminum inner tube. In another embodiment, the convolutely wound tubular structure comprises a 1% ringdown time approximately equal to 7.5 seconds, which is 31.8% less than the 11.0 second 1% ringdown time of the convolutely wound aluminum sheet metal and is 31.8% less than the 11.0 second 1% ringdown time of the aluminum outer tube and is 31.8% less than the 11.0 second 1% ringdown time of the aluminum inner tube.

In a second non-limiting example, a convolutely wound tubular structure 180 is provided with improved internal vibration damping, wherein the convolutely wound tubular structure comprises at least two convolutions of a first material and a second material, wherein the first material is aluminum sheet metal comprising a 1% ringdown time of 11.0 seconds and the second material is a bonding adhesive comprising viscoelastic properties. The convolutely wound tubular structure is adhesively bonded to a stainless steel single layer outer tube comprising a 1% ringdown time of 10.0 seconds. The convolutely wound tubular structure is also adhesively bonded to a carbon fiber resin matrix single layer inner tube comprising a 1% ringdown time of 5.0 seconds. The thickness ratios of the convolutely wound aluminum sheet metal to bonding adhesive, stainless steel single layer outer tube to bonding adhesive, and carbon fiber resin matrix single layer inner tube to bonding adhesive are controlled to desirable levels as described supra. The density ratios of the aluminum sheet metal to bonding adhesive, stainless steel single layer outer tube to bonding adhesive, and carbon fiber resin matrix single layer inner tube to bonding adhesive are also controlled to desirable levels as described supra. The modulus of elasticity ratios of the aluminum sheet metal to bonding adhesive, stainless steel single layer outer tube to bonding adhesive, and carbon fiber resin matrix single layer inner tube to bonding adhesive are also controlled to desirable levels as described supra. In one embodiment, the convolutely wound tubular structure comprises a 1% ringdown time approximately equal to 8.8 seconds, which is 20.0% less than the 11.0 second 1% ringdown time of the convolutely wound aluminum sheet metal and is 12.0% less than the 10.0 second 1% ringdown time of the stainless steel outer tube and is 76% higher than the 5.0 second 1% ringdown time of the carbon fiber resin matrix inner tube. In another embodiment, the convolutely wound tubular structure comprises a 1% ringdown time approximately equal to 6.5 seconds, which is 40.9% less than the 11.0 second 1% ringdown time of the convolutely wound aluminum sheet metal and is 35.0% less than the 10.0 second 1% ringdown time of the stainless steel outer tube and is 30.0% greater than the 5.0 second 1% ringdown time of the carbon fiber resin matrix inner tube. In another embodiment, the convolutely wound tubular structure comprises a 1% ringdown time approximately equal to 2.5 seconds, which is 77.3% less than the 11.0 second 1% ringdown time of the convolutely wound aluminum sheet metal and is 75.0% less than the 10.0 second 1% ringdown time of the stainless steel outer tube and is 50.0% less than the 5.0 second 1% ringdown time of the carbon fiber resin matrix inner tube.

In a third non-limiting example, a tubular structure is provided with improved internal vibration damping, wherein an aluminum outer tube comprising a 1% ringdown time of 11.0 seconds is adhesively bonded to a carbon fiber resin matrix inner tube comprising a 1% ringdown time of 4.5 seconds. In one embodiment, the adhesive comprises viscoelastic properties effective in converting mechanical vibration energy into thermal energy. The thickness ratios of the aluminum outer tube to the bonding adhesive and the inner carbon fiber resin matrix tube to the bonding adhesive are controlled to desirable levels as described supra. The density ratios of the aluminum outer tube to the bonding adhesive and the carbon fiber resin matrix inner tube to the bonding adhesive are also controlled to desirable levels as described supra. The modulus of elasticity ratios of the aluminum outer tube to the bonding adhesive and the carbon fiber resin matrix inner tube to the bonding adhesive are also controlled to desirable levels as described supra. In one embodiment, the convolutely wound tubular structure comprises a 1% ringdown time approximately equal to 9.2 seconds, which is 16.4% less than the 11.0 second 1% ringdown time of the aluminum outer tube and is 104.4% greater than the carbon fiber resin matrix inner tube. In another embodiment, the convolutely wound tubular structure comprises a 1% ringdown time approximately equal to 5.3 seconds, which is 51.8% less than the 11.0 second 1% ringdown time of the aluminum outer tube and is 17.8% greater than the 4.5 second 1% ringdown time of the carbon fiber resin matrix inner tube. In another embodiment, the convolutely wound tubular structure comprises a 1% ringdown time approximately equal to 1.8 seconds, which is 83.6% less than the 11.0 second 1% ringdown time of the aluminum outer tube and is 60.0% less than the 4.5 second 1% ringdown time of the inner carbon fiber resin matrix tube.

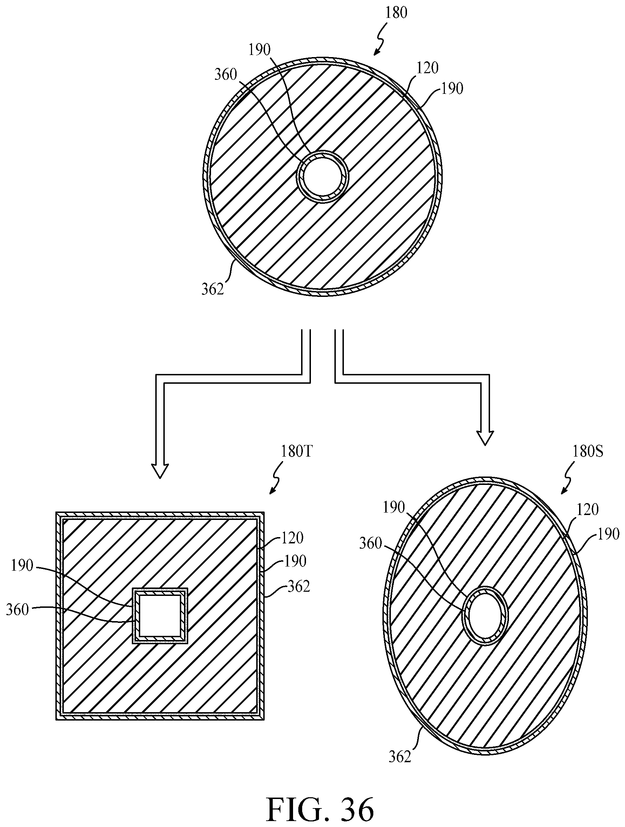

Alternative embodiments of convolutely wound tubular structures 180 comprising improved vibration damping may be provided. In one alternative embodiment, the cross sectional shape of the convolutely wound tubular structure 180 may be circular. The convolutely wound tubular structure may subsequently be altered using a hydroforming process known to those of skill in the art to reshape the convolutely wound tubular structure as shown in Fig. 36 into another cross sectional shape, including but not limited to, elliptical 180S or rectangular 180T.

In another alternative embodiment, a convolutely wound tubular structure 180 comprises a first layer of a convolutely wound re-coilable material such as sheet metal. The first layer of convolutely wound re-coilable material may be adhesively bonded to an adjacent layer by a first adhesive. A second layer of the re-coilable material such as sheet metal may be adhesively bonded to an adjacent layer by a second adhesive. The first adhesive may be selected to provide desired vibration damping in a first frequency range and the second adhesive may be selected to provide desired vibration damping in a second frequency range.

In another alternative embodiment, a first layer of a convolutely wound tubular structure 180 comprises a first re-coilable material and is adhesively bonded to an adjacent second layer of the convolutely wound tubular structure 180 comprising a second re-coilable material.

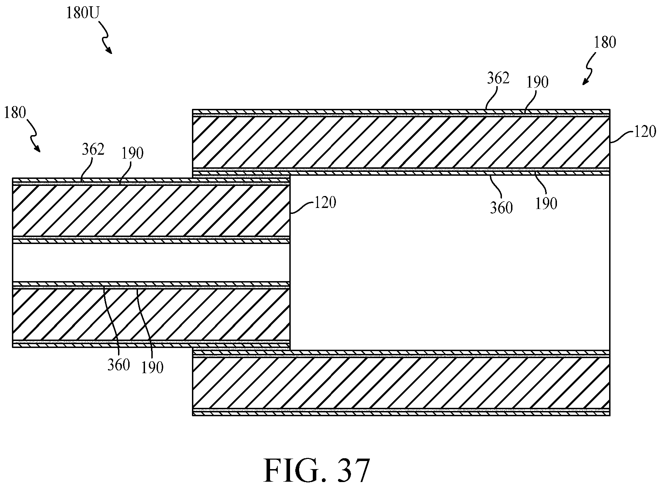

In another alternative embodiment shown in Fig. 37, a tubular structure 180U includes a first convolutely wound tubular structure 180 comprising a first inner diameter and a second convolutely wound tubular structure 180 comprising a second outer diameter. The first inner diameter is slightly larger than the second outer diameter. Adhesive 190 is applied to the outer surface of a first end of the second convolutely wound tubular structure for a desired first length. The first end of the second convolutely wound tubular structure is then inserted inside the first convolutely wound tubular structure wherein the overlapping length is approximately equal to the desired first length and the two tubular structures are adhesively bonded. This method may be used to produce a desired stepped shaft configuration of convolutely wound tubular structures 180 wherein the total length of the tubular structure assembly is substantially longer than the length of the first convolutely wound tubular structure and is substantially longer than the length of the second convolutely wound tubular structure.

In another alternative embodiment, components are assembled to a convolutely wound tubular structure 180. The components may include, but are not limited to, robot wrist mounting adapters, tool mounting adapters, vacuum cups and related tubing and connectors, accelerometers, and orthogonal tube mounting connectors.

### Examples

Example 1 - A sheet metal is convolutely wound on a mandrel to form a tubular structure. A 72 inch wide supply coil of aluminum alloy 1235 sheet metal comprising a uniform thickness of 0.005 and an 11.0 second ringdown time is unwound, the leading edge of the sheet metal is conveyed to a round, 2 inch diameter mandrel, attached to the mandrel, and rewound until five convolutions have been attained, at which point the sheet metal is cut off in the cross machine direction and the winding operation is terminated. At least a portion of adjacent layers of sheet metal are adhesively bonded as they are wound into the tubular structure, wherein the adhesive comprises viscoelastic properties and is effective in converting vibration mechanical energy into thermal energy. The adhesive comprises a thickness of 0.01 inches, The wound tubular structure comprises a length of 72 inches, an internal diameter of 2 inches, a uniform wall thickness of 0.065 inches (comprising 5 layers of sheet metal and 4 layers of adhesive), and an outside diameter of 2.13 inches. The tube comprises a 6.8 second 1% ringdown time, 38.2% less than the 11.0 second 1% ringdown time of the convolutely wound aluminum sheet metal. The tube may be used as a robot tube extension and is used to position a welding tool at a desired work point position.

Example 2 - A sheet metal is convolutely wound on a mandrel to form a tubular structure. A 60 inch wide supply coil of aluminum alloy 1100 sheet metal comprising a uniform thickness of 0.007 inches and an 11.0 second 1% ringdown time is unwound, the leading edge of the sheet metal is conveyed to a round, 2 inch diameter mandrel, attached to the mandrel, and rewound until 3 convolutions have been attained, at which point the sheet metal is cut off in the cross machine direction and the winding operation is terminated. At least a portion of adjacent layers of sheet metal are adhesively bonded as they are wound into the tubular structure, wherein the adhesive comprises viscoelastic properties and is effective in converting vibration mechanical energy into thermal energy. The adhesive comprises a thickness of 0.01 inches. The wound tubular structure comprises a length of 60 inches, an internal diameter of 2 inches, a uniform wall thickness of 0.041 inches (comprising 3 layers of sheet metal and 2 layers of adhesive), and an outside diameter of 2.082 inches. The wound tubular structure is subsequently adhesively bonded inside an aluminum outer tube comprising a length of 60 inches, an inner diameter of 2.112 inches, an outer diameter of 2.182 inches, and an 11.0 second 1% ringdown time. The tube assembly, including the convolutely wound sheet metal, adhesive, and aluminum outer tube, comprises a length of 60 inches, an inner diameter of 2 inches, a uniform wall thickness of .091 inches, and an outer diameter of 2.182 inches. The tube structure comprises a 4.2 second 1% ringdown time, which is 61.8% less than the 11.0 second 1% ringdown time of the convolutely wound aluminum sheet metal and is 61.8% less than the 11.0 second 1% ringdown time of the aluminum outer tube. The tube assembly may be used as a robot tube extension and is used to position a grinding tool at a desired work point.

Example 3 - A sheet metal is convolutely wound on a mandrel to form a tubular structure. A 36 inch wide supply coil of stainless steel 304 sheet metal comprising a uniform thickness of 0.004 inches and a 10.0 second 1% ringdown time is unwound and the leading edge of the sheet metal is conveyed to a round, 3 inch outer diameter carbon fiber resin matrix mandrel which will become a component in the fully assembled tubular structure. The carbon fiber resin matrix tube used as the mandrel comprises a length of 36 inches, an inner diameter of 2.7 inches, and a 5.5 second 1% ringdown time. The sheet metal is attached to the carbon fiber resin matrix mandrel and rewound until 10 convolutions have been attained, at which point the sheet metal is cut off in the cross machine direction and the winding operation is terminated. At least a portion of adjacent layers of sheet metal are adhesively bonded as they are wound into the tubular structure wherein the adhesive comprises a uniform thickness of 0.01 inches. The adhesive also comprises viscoelastic properties effective at converting vibration mechanical energy into thermal energy. The wound tubular structure, including the carbon fiber resin matrix tube, comprises a length of 36 inches, an internal diameter of 2.7 inches, a uniform wall thickness of 0.28 inches, and an outside diameter of 3.26 inches. The wound tubular structure is subsequently adhesively bonded inside a stainless steel tube comprising a length of 36 inches, an inner diameter of 3.29 inches, and an outer diameter of 3.36 inches. The tube assembly, including the adhesively bonded inner carbon fiber resin matrix tube, the convolutely wound and adhesively bonded stainless steel sheet metal, and the adhesively bonded outer stainless steel tube comprises a length of 36 inches, an inner diameter of 2.7 inches, a uniform wall thickness of 0.33 inches, and an outer diameter of 3.36 inches. The tube comprises a 2.4 second 1% ringdown time, which is 76% less than the 10.0 second 1 % ringdown time of the convolutely wound stainless steel and is 76% less than the 10.0 second 1 % ringdown time of the stainless steel outer tube and is 56.4% less than the 5.5 second 1% ringdown time of the inner carbon fiber resin matrix tube. The tube assembly may be used as a robot tube extension for a vacuum cup gripper positioned at desired work points for forming a layer of products on a pallet.

Example 4 - A carbon fiber resin matrix inner tube is adhesively bonded inside an aluminum outer tube with adhesive comprising viscoelastic properties effective in converting vibration mechanical energy into thermal energy. The carbon fiber resin matrix inner tube comprises a length of 72 inches, an inner diameter of 1.29 inches, a wall thickness of 0.15 inches, an outer diameter of 1.59 inches, and a 3.6 second 1% ringdown time. The aluminum outer tube comprises a length of 72 inches, an inner diameter of 1.62 inches, a wall thickness of 0.065 inches, an outer diameter of 1.75 inches, and an 11.0 second 1% ringdown time. The assembled tubular structure, including the inner carbon fiber resin matrix tube, bonding adhesive, and outer aluminum tube, comprises a length of 72 inches, an internal diameter of 1.29 inches, a uniform wall thickness of 0.23 inches, and an outside diameter of 1.75 inches. The tube comprises a 5.8 second 1% ringdown time, which is 47.3% less than the 11.0 second 1 % ringdown time of the aluminum outer tube and is 61.1% greater than the 3.6 second 1 % ringdown time of the inner carbon fiber resin matrix tube. The tube assembly may be used as a robot tube extension for a laser paint ablation tool positioned at desired work points on an aircraft.

From the above disclosure of the general principles of this invention and the preceding detailed description of at least one embodiment, those skilled in the art will readily comprehend the various modifications to which this invention is susceptible. Therefore, we desire to be limited only by the scope of the following claims and equivalents thereof.

## Claims

1. A process for making a tubular structure having a machine direction, a cross-machine direction coplanar thereto, and a Z-direction orthogonal to both said machine- and cross-machine directions, said process comprising the steps of:
disposing a sheet metal supply coil of a sheet metal on an uncoiler;
unwinding the sheet metal from the sheet metal supply coil with the uncoiler;
directing the sheet metal to a mandrel on a recoiler, the mandrel having a defined geometry providing the convolutely wound tubular structure with a desired internal cross-sectional shape and size;
disposing a leading edge of the sheet metal on the mandrel;
rotating the mandrel to coaxially dispose the first sheet metal about the mandrel to form a convolutely wound region of the tubular structure and provide the convolutely wound region with a first desired thickness;
when the convolutely wound region attains the first desired thickness, severing the sheet metal in the cross-machine direction, forming a tail portion of the convolutely wound region;
attaching the tail portion of the convolutely wound region to a previous convolution of the convolutely wound region of the tubular structure; and
providing an additional region on one of an interior of the convolutely wound region and an exterior of the convolutely wound region to thereby provide the tubular structure with the additional region and the convolutely wound region.

2. The process of claim 1 further comprising:
securing a first inner convolution of the sheet metal to the mandrel; and
removing the convolutely wound region and the mandrel secured thereto from the recoiler to thereby provide the tubular structure having the additional region comprising the mandrel and the convolutely wound region secured to the additional region at the interior of the convolutely wound region.

3. The process of claim 2 wherein the securing step further comprises:
applying a layer of adhesive between the mandrel and the first inner convolution of the sheet metal.

4. The process of claim 1 further comprising:
securing the additional region to the exterior of the convolutely wound region.

5. The process of claim 4 wherein the securing step further comprises:
applying a layer of adhesive between the additional region and the tail portion and an associated terminal convolution of the sheet metal.

6. The process of claim 1 wherein the providing step further comprises:
providing the additional region as a single layer tubular member of one of a homogeneous and a heterogeneous material.

7. The process of claim 6 wherein the additional region further comprises one of aluminum, carbon steel, stainless steel, metal alloys, carbon fiber resin matrix and fiberglass.

8. The process of claim 1 further comprising:
securing the additional region to the convolutely wound region at a cylindrical interface between the additional region and the convolutely wound region.

9. The process of claim 8 wherein the securing step further comprises:
applying a layer of adhesive at the cylindrical interface of the additional region and the adjacent convolution of the sheet metal.

10. The process of claim 8 wherein an outer diameter of the additional region is greater than an inner diameter of the convolutely wound region at ambient temperature, the securing step further comprises:
heating the convolutely wound region above an ambient temperature and thereby expanding the inner diameter of the convolutely wound region;
inserting the additional region into the expanded inner diameter of the convolutely wound region; and
returning the convolutely wound region to the ambient temperature to thereby compression fit the additional region into the interior of the convolutely wound region.

11. The process of claim 10 further comprising:
cooling the additional region below the ambient temperature and thereby contracting the outer diameter of the additional region prior to the inserting step; and
returning the additional region to the ambient temperature to thereby compression fit the additional region into the interior of the convolutely wound region.

12. The process of claim 8 wherein an inner diameter of the additional region is less than an outer diameter of the convolutely wound region at an ambient temperature, the securing step further comprises:
cooling the convolutely wound region below the ambient temperature and thereby contracting the outer diameter of the convolutely wound region;
inserting the contracted convolutely wound region into the inner diameter of the additional region; and
returning the convolutely wound region to the ambient temperature to thereby compression fit the convolutely wound region into the interior of the additional region.

13. The process of claim 12 further comprising:
heating the additional region above the ambient temperature and thereby expanding the inner diameter of the additional region prior to the inserting step; and
returning the additional region to the ambient temperature to thereby compression fit the convolutely wound region into the interior of the additional region.

14. The process of claim 1 wherein the providing step further comprises inserting the additional region into the interior of the convolutely wound region, the process further comprising:
inserting the convolutely wound region into an interior of an outer region to thereby sandwich the convolutely wound region between the additional region and the outer region of the tubular structure.

15. The process of claim 14 further comprising:
securing the convolutely wound region to both the additional region and the outer region by one of providing a first adhesive layer and a second adhesive layer on the interior and the exterior of the convolutely wound region, respectively, and compression fitting the convolutely wound region between the additional region and the outer region.

16. The process of claim 15 wherein the securing step further comprises:
adhesively securing adjacent convolutions of the sheet metal together with a first adhesive region in the convolutely wound region;
adhesively securing the interior of the convolutely wound region to the additional region with a second adhesive region; and
adhesively securing the exterior of the convolutely wound region to the outer region with a third adhesive region;
wherein the first, second and third adhesive regions provide vibration damping to the tubular structure.

17. The process of claim 14 wherein the providing and inserting steps each further comprise:
providing the additional region and the outer region each as a single layer tubular member of one of a homogeneous and a heterogeneous material;
wherein the additional region and the outer region each further comprise one of aluminum, carbon steel, stainless steel, metal alloys, carbon fiber resin matrix and fiberglass.

18. A process for making a tubular structure having a machine direction, a cross-machine direction coplanar thereto, and a Z-direction orthogonal to both said machine- and cross-machine directions, said process comprising the steps of:
disposing a sheet metal supply coil of a sheet metal on an uncoiler;
unwinding the sheet metal from the sheet metal supply coil with the uncoiler;
directing the sheet metal to a mandrel on a recoiler, the mandrel having a defined geometry providing the convolutely wound tubular structure with a desired internal cross-sectional shape and size;
disposing a leading edge of the sheet metal on the mandrel;
rotating the mandrel to coaxially dispose the first sheet metal about the mandrel to form a convolutely wound region of the tubular structure and provide the convolutely wound region with a first desired thickness;
when the convolutely wound region attains the first desired thickness, severing the sheet metal in the cross-machine direction, forming a tail portion of the convolutely wound region;
attaching the tail portion of the convolutely wound region to a previous convolution of the convolutely wound region of the tubular structure;
providing an additional region on one of an interior of the convolutely wound region and an exterior of the convolutely wound region to thereby provide the tubular structure with the additional region and the convolutely wound region, wherein the additional region is a single layer tubular member of one of a homogeneous and a heterogeneous material, wherein the additional region further comprises one of aluminum, carbon steel, stainless steel, metal alloys, carbon fiber resin matrix and fiberglass;
applying a layer of adhesive between the additional region and the convolutely wound region.

19. The process of claim 18 further comprising:
securing a first inner convolution of the sheet metal to the mandrel; and
removing the convolutely wound region and the mandrel secured thereto from the recoiler to thereby provide the tubular structure having the additional region comprising the mandrel and the convolutely wound region secured to the additional region at the interior of the convolutely wound region.

20. The process of claim 18 further comprising:
securing the additional region to the exterior of the convolutely wound region.

21. A tubular structure having a machine direction, a cross-machine direction coplanar thereto, and a Z-direction orthogonal to both said machine and cross-machine directions, the tubular structure comprising:
an outer region on an exterior of the tubular structure, wherein the outer region is a first single layer tubular member of one of a homogeneous and a heterogeneous material, wherein the outer region further comprises one of aluminum, carbon steel, stainless steel, metal alloys, carbon fiber resin matrix and fiberglass
an additional region on an interior of the tubular structure, wherein the additional region is a second single layer tubular member of one of a homogeneous and a heterogeneous material, wherein the additional region further comprises one of aluminum, carbon steel, stainless steel, metal alloys, carbon fiber resin matrix and fiberglass;
a first layer of adhesive between the additional region and the outer region.

22. The tubular structure of claim 21 further comprising:
a convolutely wound region of a plurality of convolutions of a metal sheet, the convolutely wound region being sandwiched between the outer region and the additional region of the tubular structure;
wherein selected ones of the plurality of convolutions are adhesively adhered to an adjacent one of the plurality of convolutions in the convolutely wound region;
wherein the first layer of adhesive adheres the additional region to the convolutely wound region; and
a second layer of adhesive adhering the convolutely wound region to the outer region.

23. The tubular structure of claim 21 wherein the first layer of adhesive comprises viscoelastic properties and provides vibration damping to the tubular structure,
